(19) **Europäisches Patentamt European Patent Office Office européen des brevets**

(11) **EP 4 447 559 A1**

(12) **EUROPEAN PATENT APPLICATION**
published in accordance with Art. 153(4) EPC

(43) Date of publication:
**16.10.2024 Bulletin 2024/42**

(21) Application number: **22914971.1**

(22) Date of filing: **28.12.2022**

(51) International Patent Classification (IPC):
**H04W 48/02** (2009.01)     **H04W 36/00** (2009.01)

(52) Cooperative Patent Classification (CPC):
**H04W 8/24; H04W 36/00; H04W 36/08; H04W 48/02**

(86) International application number:
**PCT/CN2022/143021**

(87) International publication number:
**WO 2023/125721 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2021 CN 202111660387**

(71) Applicant: **Huawei Technologies Co., Ltd. Shenzhen, Guangdong 518129 (CN)**

(72) Inventors:
- **QIAO, Yunfei**
  **Shenzhen, Guangdong 518129 (CN)**
- **ZHANG, Gongzheng**
  **Shenzhen, Guangdong 518129 (CN)**
- **LI, Rong**
  **Shenzhen, Guangdong 518129 (CN)**

(74) Representative: **Gill Jennings & Every LLP The Broadgate Tower 20 Primrose Street London EC2A 2ES (GB)**

(54) **COMMUNICATION METHOD AND APPARATUS**

(57) This application provides a communication method and apparatus. The method may be applied to a first communication apparatus. The method includes: The first communication apparatus receives first information from a second communication apparatus, and selects a first node to be camped on from at least one first node based on the first information. The first information indicates an artificial intelligence processing capability of the at least one first node. The first communication apparatus may select a node whose artificial intelligence processing capability matches a requirement as the node to be camped on, so that the first communication apparatus obtains an artificial intelligence service that meets the requirement.

FIG. 4

FIG. 5

**Description**

This application claims priority to Chinese Patent Application No. 202111660387.X, filed with the China National Intellectual Property Administration on December 30, 2021 and entitled "COMMUNICATION METHOD AND APPARATUS", which is incorporated herein by reference in its entirety.

**TECHNICAL FIELD**

This application relates to the communication field, and in particular, to a communication method and apparatus.

**BACKGROUND**

With rapid development of an artificial intelligence (artificial intelligence, AI) technology and a communication technology, intelligentization of a communication network is an important evolution trend. A network data analysis function (network data analytics function, NWDAF) is added to a 5th generation mobile communication (5th generation mobile networks, 5G) network, to introduce an AI function into the communication network. Specifically, an AI model can be trained by using the NWDAF. The trained AI model can be applied to the fields of mobility management, session management, network automation, and the like, and can replace a method based on a numerical formula in an original network function, to achieve intelligentization of the communication network.

In a current mobility management process, for example, cell selection, only performance of a connection between a terminal device and a network device is considered, and a case in which an AI function is introduced into the network is not considered. Consequently, the terminal device cannot obtain a better AI service. Based on this, when the AI function is introduced into the network, how to provide mobility management to enable the terminal device to obtain a better AI service is an urgent problem to be resolved.

**SUMMARY**

Embodiments of this application provide a communication method and apparatus, so that a terminal device can obtain a better AI service.

To achieve the foregoing objective, the following technical solutions are used in this application.

According to a first aspect, a communication method is provided. The method may be applied to a first communication apparatus. The method includes: The first communication apparatus receives first information from a second communication apparatus, and selects a first node to be camped on from at least one first node based on the first information. The first information indicates an AI processing capability of the at least one first node.

In the method provided in the first aspect, the first communication apparatus may select a node to be camped on from the at least one first node based on the AI processing capability of the at least one first node, so that the first communication apparatus can obtain an AI service that meets a requirement.

In a possible implementation, the first communication apparatus may be a terminal device, the second communication apparatus may be a network device, the first node may be an AI node, and the AI node may be a network element having an AI function. Optionally, the at least one first node includes an AI node associated with or co-located with the network device, and may further include another AI node that can communicate with the network device. For example, when the first node and the network device are co-located, the network device may be a RAN node having the AI function. The terminal device may select an AI node to be camped on from at least one AI node based on an AI processing capability of the at least one AI node. The AI node on which the terminal device camps may be an AI node associated with the network device, or may be another AI node that can communicate with the network device. The terminal device may select an AI node whose AI processing capability matches a requirement as the AI node to be camped on, so that the terminal device obtains an AI service that meets the requirement.

In a possible implementation, the method according to the first aspect may be applied to a plurality of terminal devices. In this way, each of the plurality of terminal devices can select an AI node whose AI processing capability matches a requirement as an AI node to be camped on, and can avoid camping on an AI node that is heavily loaded or is about to be overloaded. In other words, the plurality of terminal devices may camp on a plurality of AI nodes in a distributed manner, to avoid an excessive quantity of terminal devices camping on one AI node, and optimize performance of the AI node.

In a possible implementation, the first information may include one or more of the following: an available resource of the first node, a computing power of the first node, a lightweight model of the first node, and model precision of a neural network model of the first node. The lightweight model is determined by the neural network model of the first node. In other words, the AI processing capability of the AI node may be represented by one or more of the available resource of the first node, the computing power of the first node, the lightweight model of the first node, and the model precision of the neural network model of the first node. In this way, the AI processing capability of the AI node can be more accurately represented, and the terminal device can more accurately select the AI node whose AI processing capability matches the requirement as the AI node to be camped on, so that the terminal device obtains the AI service that meets the requirement.

In a possible implementation, the available resource of the first node may include one or more of the following: processor operating performance of the first node, memory performance of the first node, and to-be-processed task information of the first node.

In a possible implementation, the method according to the first aspect may further include: The first communication apparatus sends reference data to the second communication apparatus. The reference data may be used to determine the model precision of the neural network model of the first node. In other words, the AI processing capability may be determined based on the reference data reported by the first communication apparatus.

The reference data reported by the first communication apparatus may be from a to-be-processed task of the first communication apparatus. The AI processing capability determined based on the reference data may be represented as performance that is of the AI node and that exists when the AI node processes the to-be-processed task of the first communication apparatus. In this way, the first communication apparatus may more accurately select the AI node whose AI processing capability matches the requirement as the AI node to be camped on, so that the first communication apparatus obtains the AI service that meets the requirement.

In a possible implementation, the method according to the first aspect may further include: The first communication apparatus measures performance of the neural network model of the first node based on the lightweight model of the first node. The lightweight model of the first node may be generated by the first node based on a first task and the neural network model.

Specifically, the first communication apparatus may process the first task based on the lightweight model of the first node, to obtain processing performance, and use the processing performance to identify performance that is of the neural network model of the first node and that exists when the neural network model of the first node processes the first task. In this way, when the first communication apparatus selects the AI node to be camped on, if the first communication apparatus needs to process the first task, the first communication apparatus may select, based on the performance existing when the first task is processed, a more appropriate AI node as the AI node to be camped on, so that the first communication apparatus obtains the AI service that meets the requirement.

In a possible implementation, the first information may be carried in broadcast-level information and/or terminal-level information.

Optionally, the broadcast-level information may include a system information block (system information block, SIB). In this way, the first information may be sent to the plurality of terminal devices in a broadcast manner, to reduce signaling overheads.

Optionally, the terminal-level information may include a radio resource control (radio resource control, RRC) message. In other words, the first information may be carried in the RRC message. The first information may be alternatively carried in a non-access stratum (non-access stratum, NAS) message. In this way, the first information may be sent to a terminal device, so that message transmission is more accurate.

In a possible implementation, the method according to the first aspect may further include: The first communication apparatus receives second information from the second communication apparatus. The second information may indicate a configuration parameter of the first node to be camped on. The configuration parameter may include one or more of the following: a permission parameter, a model parameter, and dataset information. The permission parameter may indicate whether the first node to be camped on allows camping. The model parameter may be a parameter of a neural network model of the first node to be camped on. The dataset information may indicate a dataset used to train the neural network model of the first node to be camped on. In this way, the first communication apparatus may update, based on the second information, a configuration parameter of the AI node to be camped on, to complete AI node reselection.

In a possible implementation, that the first communication apparatus selects a first node to be camped on from at least one first node based on the first information may include: If a computing power of a node on which the first communication apparatus currently camps is less than a computing power threshold, the first communication apparatus selects the first node to be camped on from the at least one first node based on the first information. In other words, when an AI node on which the first communication apparatus currently camps cannot provide the AI service that meets the requirement, the first communication apparatus may select, based on a processing capability of an AI node, the AI node to camp on. In this way, when it is ensured that the first communication apparatus can obtain the AI service that meets the requirement, a quantity of times the first communication apparatus reselects an AI node can be reduced, and power consumption of the first communication apparatus can be reduced.

In a possible implementation, that the first communication apparatus selects a first node to be camped on from at least one first node based on the first information may include: First, the first communication apparatus determines a computing power of each of the at least one first node based on the first information. Then, the first communication apparatus obtains a delay of each of the at least one first node. Finally, when a first condition is met, the first communication apparatus determines a second node as the first node to be camped on. The first condition may include that the second node exists in the at least one first node. The second node is a first node that meets one or more of the following conditions: a computing power of the second node is greater than a first computing power, the computing power of the second node is greater than a second computing power, a delay of the second node is less than a first delay, and the delay of the second node is less than a second delay. The first computing power may be a computing power of a node on which the first communication apparatus currently camps. The second computing power may be a sum of the computing power of the node on which the first communication apparatus currently camps and a first threshold. The first delay may be a delay of the node on which the first communication apparatus currently camps. The second delay may be a sum of the delay of the node on which the first communication apparatus currently camps and a second threshold. In this way, the first communication apparatus may select an AI node with a stronger processing capability to camp on, to improve AI processing performance of the first communication apparatus.

Optionally, the delay includes at least one of a transmission delay, a processing delay, and a communication delay. Specifically, the transmission delay may include a transmission latency of data between the first communication apparatus and the first node. The processing delay may include a processing latency of data at the first node. The communication delay may include the transmission delay and the processing delay.

In a possible implementation, the first information further indicates the first communication apparatus to keep in an idle (idle) state. In this way, the first communication apparatus may select, based on the processing capability of the AI node without exiting the idle state, the AI node to camp on, to reduce power consumption of the first communication apparatus.

According to a second aspect, a communication method is provided. The method may be applied to a second communication apparatus. The method includes: First, the second communication apparatus obtains first information. The first information indicates an AI processing capability of at least one first node, and the first information is used by a first communication apparatus to select a first node to be camped on from the at least one first node. Specifically, the second communication apparatus sends the first information to the first communication apparatus.

In a possible implementation, the first communication apparatus may be a terminal device, the second communication apparatus may be a network device, the first node may be an AI node, and the AI node may be a network element having an AI function. Optionally, the at least one first node includes an AI node associated with or co-located with the network device, and may further include another AI node that can communicate with the network device. For example, when the first node and the network device are co-located, the network device may be a RAN node having the AI function.

In a possible implementation, the first information may include one or more of the following: an available resource of the first node, a computing power of the first node, a lightweight model of the first node, and model precision of a neural network model of the first node. The lightweight model is determined by the neural network model of the first node.

The lightweight model of the first node may be generated by the first node based on a first task and the neural network model.

In a possible implementation, the available resource of the first node may include one or more of the following: processor operating performance of the first node, memory performance of the first node, and to-be-processed task information of the first node.

In a possible implementation, the method according to the second aspect may further include: The second communication apparatus receives reference data from the first communication apparatus. The reference data is used to determine the model precision of the neural network model of the first node.

The reference data reported by the first communication apparatus may be from a to-be-processed task of the first communication apparatus. An AI processing capability determined based on the reference data may be represented as performance that is of the AI node and that exists when the AI node processes the to-be-processed task of the first communication apparatus.

In a possible implementation, the method according to the second aspect may further include: The second communication apparatus receives AI early data transmission (early data transmission, EDT) information. The AI EDT information may indicate the reference data.

In a possible implementation, the first information may be carried in broadcast-level information and/or terminal-level information.

Optionally, the broadcast-level information may include a SIB.

Optionally, the terminal-level information may include an RRC message. In other words, the first information may be carried in the RRC message. The first information may be alternatively carried in a NAS message.

In a possible implementation, the method according to the second aspect may further include: The second communication apparatus sends second information to the first communication apparatus. The second information may indicate a configuration parameter of the first node to be camped on. The configuration parameter may include one or more of the following: a permission parameter, a model parameter, and dataset information. The permission parameter may indicate whether the first node to be camped on allows camping. The model parameter may be a parameter of a neural network model of the first node to be camped on. The dataset information may indicate a dataset used to train the neural network model of the first node to be camped on.

In a possible implementation, the first information further indicates the first communication apparatus to keep in an idle state.

In addition, for technical effects of the communication method according to the second aspect, refer to the technical effects of the communication method according to the first aspect. Details are not described herein again.

According to a third aspect, a communication apparatus is provided. The communication apparatus may be used in the first communication apparatus in the first aspect. The communication apparatus may be a terminal device, or may be an apparatus (for example, a chip, a chip system, or a circuit) in a terminal device, or may be an apparatus that can be used in a matching manner with a terminal device. In a possible implementation, the communication apparatus may include a module or unit that one-to-one corresponds to the method/operation/step/action described in the first aspect. The module or unit may be a hardware circuit or software, or may be implemented in a combination of a hardware circuit and software.

The first communication apparatus may include a processing module and a transceiver module. The processing module is configured to receive first information from a second communication apparatus. The first information indicates an AI processing capability of at least one first node. The transceiver module is configured to select a first node to be camped on from the at least one first node based on the first information.

In a possible implementation, the second communication apparatus may be a network device, the first node may be an AI node, and the AI node may be a network element having an AI function. Optionally, the at least one first node includes an AI node associated with or co-located with the network device, and may further include another AI node that can communicate with the network device. For example, when the first node and the network device are co-located, the network device may be a RAN node having the AI function.

In a possible implementation, the first information may include one or more of the following: an available resource of the first node, a computing power of the first node, a lightweight model of the first node, and model precision of a neural network model of the first node. The lightweight model is determined by the neural network model of the first node.

In a possible implementation, the available resource of the first node may include one or more of the following: processor operating performance of the first node, memory performance of the first node, and to-be-processed task information of the first node.

In a possible implementation, the transceiver module is further configured to send reference data to the second communication apparatus. The reference data may be used to determine the model precision of the neural network model of the first node.

The reference data reported by the first communication apparatus may be from a to-be-processed task of the first communication apparatus. An AI processing capability determined based on the reference data may be represented as performance that is of the AI node and that exists when the AI node processes the to-be-processed task of the first communication apparatus.

In a possible implementation, the processing module is further configured to measure performance of the neural network model of the first node based on the lightweight model of the first node. The lightweight model of the first node may be generated by the first node based on a first task and the neural network model.

Specifically, the processing module is further configured to process the first task based on the lightweight model of the first node, to obtain processing performance, and use the processing performance to identify performance that is of the neural network model of the first node and that exists when the neural network model of the first node processes the first task.

In a possible implementation, the first information may be carried in broadcast-level information and/or terminal-level information.

Optionally, the broadcast-level information may include a SIB.

Optionally, the terminal-level information may include an RRC message. In other words, the first information may be carried in the RRC message. The first information may be alternatively carried in a NAS message.

In a possible implementation, the transceiver module is further configured to receive second information from the second communication apparatus. The second information may indicate a configuration parameter of the first node to be camped on. The configuration parameter may include one or more of the following: a permission parameter, a model parameter, and dataset information. The permission parameter may indicate whether the first node to be camped on allows camping. The model parameter may be a parameter of a neural network model of the first node to be camped on. The dataset information may indicate a dataset used to train the neural network model of the first node to be camped on.

In a possible implementation, the processing module is further configured to: if a computing power of a node on which the first communication apparatus currently camps is less than a computing power threshold, select the first node to be camped on from the at least one first node based on the first information.

In a possible implementation, the processing module is further configured to determine a computing power of each of the at least one first node based on the first information. The processing module is further configured to obtain a delay of each of the at least one first node. The processing module is further configured to: when a first condition is met, determine a second node as the first node to be camped on. The first condition may include that the second node exists in the at least one first node. The second node is a first node that meets one or more of the following conditions: a computing power of the second node is greater than a first computing power, the computing power of the second node is greater than a second computing power, a delay of the second node is less than a first delay, and the delay of the second node is less than a second delay. The first computing power may be a computing power of a node on which the first communication apparatus currently camps. The second computing power may be a sum of the computing power of the node on which the first communication apparatus currently camps and a first threshold. The first delay may be a delay of the node on which the first communication apparatus currently camps. The second delay may be a sum of the delay of the node on which the first communication apparatus currently camps and a second threshold.

Optionally, the delay includes at least one of a transmission delay, a processing delay, and a communication delay. Specifically, the transmission delay may include a transmission latency of data between the first communication apparatus and the first node. The processing delay may include a processing latency of data at the first node. The communication delay may include the transmission delay and the processing delay.

In a possible implementation, the first information further indicates the first communication apparatus to keep in an idle state.

Optionally, the transceiver module may include a receiving module and a sending module. The receiving module is configured to implement a receiving function of the first communication apparatus according to the third aspect, and the sending module is configured to implement a sending function of the first communication apparatus according to the third aspect.

Optionally, the first communication apparatus according to the third aspect may further include a storage module, and the storage module stores a program or instructions. When the processing module executes the program or the instructions, the first communication apparatus is enabled to perform the method according to the first aspect.

It should be noted that the first communication apparatus according to the third aspect may be a terminal device, or may be a chip (system) or another part or component disposed in a terminal device, or may be a communication apparatus including a terminal device. This is not limited in this application.

In addition, for technical effects of the first communication apparatus according to the third aspect, refer to the technical effects of the method according to the first aspect. Details are not described herein again.

According to a fourth aspect, a communication apparatus is provided. The communication apparatus may be used in the second communication apparatus in the second aspect. The communication apparatus may be a network device, or may be an apparatus (for example, a chip, a chip system, or a circuit) in a network device, or may be an apparatus that can be used in a matching manner with a network device. In a possible implementation, the communication apparatus may include a module or unit that one-to-one corresponds to the method/operation/step/action described in the first aspect. The module or unit may be a hardware circuit or software, or may be implemented in a combination of a hardware circuit and software.

The second communication apparatus may include a processing module and a transceiver module. The processing module is configured to obtain first information. The first information indicates an AI processing capability of at least one first node, and the first information is used by a first communication apparatus to select a first node to be camped on from the at least one first node. The transceiver module is configured to send the first information to the first communication apparatus.

In a possible implementation, the first communication apparatus may be a terminal device, the first node may be an AI node, and the AI node may be a network element having an AI function. Optionally, the at least one first node includes an AI node associated with or co-located with the network device, and may further include another AI node that can communicate with the network device. For example, when the first node and the network device are co-located, the network device may be a RAN node having the AI function.

In a possible implementation, the first information may include one or more of the following: an available resource of the first node, a computing power of the first node, a lightweight model of the first node, and model precision of a neural network model of the first node. The lightweight model is determined by the neural network model of the first node.

The lightweight model of the first node may be generated by the first node based on a first task and the neural network model.

In a possible implementation, the available resource of the first node may include one or more of the following: processor operating performance of the first node, memory performance of the first node, and to-be-processed task information of the first node.

In a possible implementation, the transceiver module is further configured to receive reference data from the first communication apparatus. The reference data may be used to determine the model precision of the neural network model of the first node.

The reference data reported by the first communication apparatus may be from a to-be-processed task of the first communication apparatus. An AI processing capability determined based on the reference data may be represented as performance that is of the AI node and that exists when the AI node processes the to-be-processed task of the first communication apparatus.

In a possible implementation, the transceiver module is further configured to receive AI EDT information. The AI EDT information may indicate the reference data.

In a possible implementation, the first information may be carried in broadcast-level information and/or terminal-level information.

Optionally, the broadcast-level information may include a SIB.

Optionally, the terminal-level information may include an RRC message. In other words, the first information may be carried in the RRC message. The first information may be alternatively carried in a NAS message.

In a possible implementation, the transceiver module is further configured to send second information to the first communication apparatus. The second information may indicate a configuration parameter of the first node to be camped on. The configuration parameter may include one or more of the following: a permission parameter, a model parameter, and dataset information. The permission parameter indicates whether the first node to be camped on allows camping. The model parameter may be a parameter of a neural network model of the first node to be camped on. The dataset information may indicate a dataset used to train the neural network model of the first node to be camped on.

In a possible implementation, the first information further indicates the first communication apparatus to keep in an idle state.

Optionally, the transceiver module may include a receiving module and a sending module. The receiving module is configured to implement a receiving function of the second communication apparatus according to the fourth aspect, and the sending module is configured to implement a sending function of the second communication apparatus according to the fourth aspect.

Optionally, the second communication apparatus according to the fourth aspect may further include a storage module, and the storage module stores a program or instructions. When the processing module executes the program or the instructions, the second communication apparatus is enabled to perform the method according to the second aspect.

It should be noted that the second communication apparatus according to the fourth aspect may be a network device, or may be a chip (system) or another part or component disposed in a network device, or may be a communication apparatus including a network device. This is not limited in this application.

In addition, for technical effects of the second communication apparatus according to the fourth aspect, refer to the technical effects of the method according to the second aspect. Details are not described herein again.

According to a fifth aspect, a communication apparatus is provided. The communication apparatus is configured to perform the communication method according to any one of the implementations of the first aspect and the second aspect.

In this application, the communication apparatus according to the fifth aspect may be a first communication apparatus or a second communication apparatus, or may be a chip (system) or another part or component disposed in a first communication apparatus or a second communication apparatus, or may be a communication apparatus including a first communication apparatus or a second communication apparatus. This is not limited in this application. The first communication apparatus is configured to perform the communication method according to any possible implementation of the first aspect, and the second communication apparatus is configured to perform the communication method according to any possible implementation of the second aspect.

It should be understood that the communication apparatus according to the fifth aspect includes a corresponding module, unit, or means (means) for implementing the communication method according to any one of the first aspect and the second aspect. The module, unit, or means may be implemented by hardware, software, or hardware executing corresponding software. The hardware or software includes one or more modules or units configured to perform functions related to the foregoing communication method.

According to a sixth aspect, a communication apparatus is provided. The communication apparatus includes a processor, and the processor is configured to perform the communication method according to any one of the possible implementations of the first aspect and the second aspect.

In a possible implementation, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible implementation, the communication apparatus according to the sixth aspect may further include a memory. The memory and the processor may be integrated together, or may be disposed separately. The memory may be configured to store a computer program and/or data related to the communication method according to any one of the first aspect and the second aspect.

In this application, the communication apparatus according to the sixth aspect may be a first communication apparatus or a second communication apparatus, or may be a chip (system) or another part or component disposed in a first communication apparatus or a second communication apparatus, or may be a communication apparatus including a first communication apparatus or a second communication apparatus. This is not limited in this application. The first communication apparatus is configured to perform the communication method according to any possible implementation of the first aspect, and the second communication apparatus is configured to perform the communication method according to any possible implementation of the second aspect.

According to a seventh aspect, a communication apparatus is provided. The communication apparatus includes a processor. The processor is coupled to a memory. The processor is configured to execute a computer program stored in the memory, so that the communication apparatus performs the communication method according to any one of the possible implementations of the first aspect and the second aspect.

In a possible implementation, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be a first communication apparatus or a second communication apparatus, or may be a chip (system) or another part or component disposed in a first communication apparatus or a second communication apparatus, or may be a communication apparatus including a first communication apparatus or a second communication apparatus. This is not limited in this application. The first communication apparatus is configured to perform the communication method according to any possible implementation of the first aspect, and the second communication apparatus is configured to perform the communication method according to any possible implementation of the second aspect.

According to an eighth aspect, a communication apparatus is provided. The communication apparatus includes a processor and an interface circuit. The interface circuit is configured to receive instructions and transmit the instructions to the processor. The processor is configured to run the instructions to perform the communication method according to any one of the implementations of the first aspect and the second aspect.

In a possible implementation, the communication apparatus according to the eighth aspect may further include a memory. The memory and the processor may be integrated together, or may be disposed separately. The memory may be configured to store a computer program and/or data related to the communication method according to any one of the first aspect and the second aspect.

In this application, the communication apparatus according to the eighth aspect may be a first communication apparatus or a second communication apparatus, or may be a chip (system) or another part or component disposed in a first communication apparatus or a second communication apparatus, or may be a communication apparatus including a first communication apparatus or a second communication apparatus. This is not limited in this application. The first communication apparatus is configured to perform the communication method according to any possible implementation of the first aspect, and the second communication apparatus is configured to perform the communication method according to any possible implementation of the second aspect.

According to a ninth aspect, a communication apparatus is provided. The communication apparatus includes a processor and a storage medium. The storage medium stores instructions. When the instructions are run by the processor, the communication method according to any one of the possible implementations of the first aspect and the second aspect is implemented.

In this application, the communication apparatus according to the ninth aspect may be a first communication apparatus or a second communication apparatus, or may be a chip (system) or another part or component disposed in a first communication apparatus or a second communication apparatus, or may be a communication apparatus including a first communication apparatus or a second communication apparatus. This is not limited in this application. The first communication apparatus is configured to perform the communication method according to any possible implementation of the first aspect, and the second communication apparatus is configured to perform the communication method according to any possible implementation of the second aspect.

According to a tenth aspect, a processor is provided. The processor is configured to perform the communication method according to any one of the possible implementations of the first aspect and the second aspect.

According to an eleventh aspect, a communication system is provided. The communication system includes a first communication apparatus or a second communication apparatus. The first communication apparatus is configured to perform the communication method according to any possible implementation of the first aspect, and the second communication apparatus is configured to perform the communication method according to any possible implementation of the second aspect.

According to a twelfth aspect, a computer-readable storage medium is provided. The computer-readable storage medium includes a computer program or instructions. When the computer program or the instructions are run by a processor, the communication method according to any one of the possible implementations of the first aspect and the second aspect is implemented.

According to a thirteenth aspect, a computer program product is provided. The computer program product includes instructions. When the instructions are run by a processor, the communication method according to any one of the possible implementations of the first aspect and the second aspect is implemented.

According to a fourteenth aspect, a chip is provided. The chip includes a processing logic circuit and an interface circuit. There may be one or more processing logic circuits, and there may be a plurality of interface circuits.

The interface circuit is configured to receive code instructions and transmit the code instructions to the processing logic circuit. The processing logic circuit is configured to run the code instructions to perform the communication method according to any one of the implementations of the first aspect and the second aspect.

Optionally, the chip may include a memory. The memory and the processing logic circuit may be integrated together, or may be disposed separately. The memory may be configured to store a computer program and/or data related to the communication method according to any one of the first aspect and the second aspect.

In this application, the chip according to the fourteenth aspect may be located in a first communication apparatus or a second communication apparatus, or may be located in a first communication apparatus or a second communication apparatus in a communication system. When being located in the first communication apparatus, the chip is configured to perform the communication method according to any possible implementation of the first aspect. When being located in the second communication apparatus, the chip is configured to perform the communication method according to any possible implementation of the second aspect.

For technical effects brought by any implementation of the fifth aspect to the fourteenth aspect, refer to the technical effects brought by a corresponding implementation of any one of the first aspect and the second aspect. Details are not described herein again.

In this application, based on implementations according to the foregoing aspects, the implementations may be further combined to provide more implementations.

**BRIEF DESCRIPTION OF DRAWINGS**

FIG. 1 is a schematic flowchart of federated learning;

FIG. 2 is a diagram of a process in which a terminal device selects an artificial intelligence node to camp on;

FIG. 3 is a diagram of an architecture of a communication system according to an embodiment of this application;

FIG. 4 is a diagram of a structure of a communication apparatus according to an embodiment of this application;

FIG. 5 is an interaction diagram 1 of a communication method according to an embodiment of this application;

FIG. 6 is a diagram of a scenario in which a terminal device selects an artificial intelligence node to camp on according to an embodiment of this application;

FIG. 7 is an interaction diagram 2 of a communication method according to an embodiment of this application; and

FIG. 8 is a diagram of a structure of a communication apparatus according to an embodiment of this application.

**DESCRIPTION OF EMBODIMENTS**

For ease of understanding solutions in embodiments of this application, a brief description of federated learning (federated learning, FL) is first provided.

The federated learning may efficiently complete a learning task of a neural network model by enabling a plurality of edge devices (which may also be referred to as clients) and a central server to collaborate with each other while fully ensuring user data privacy and security.

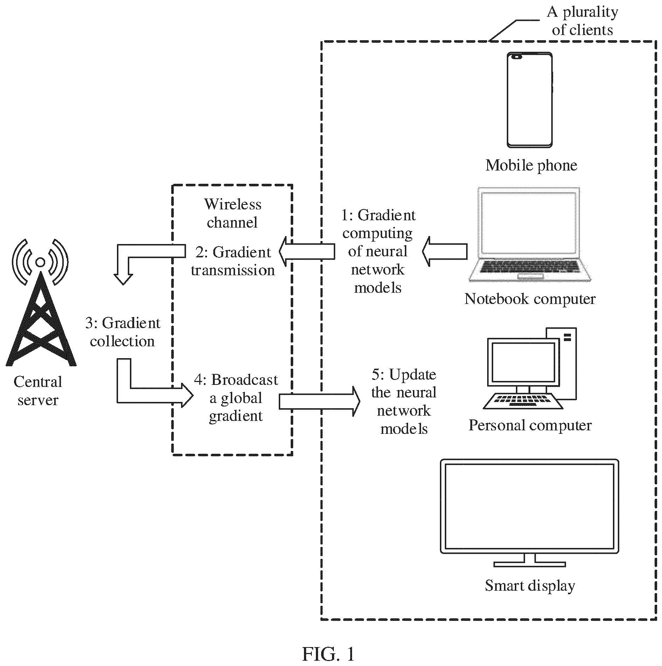

Typical federated learning includes a multi-round learning process. Specifically, FIG. 1 is a schematic flowchart of federated learning. An $i^{th}$ round of a federated learning process may include the following steps.

Step 1.1: A plurality of clients perform gradient calculation of neural network models. Specifically, an $m^{th}$ client (for example, a mobile phone in FIG. 1) in the plurality of clients trains a local neural network model based on a local dataset, and determines a gradient of the neural network model.

For example, both i and m are integers, $i \in [1, T]$, and $m \in [1, M]$. Both T and M are positive integers. T represents a quantity of training rounds of the federated learning. M represents a quantity of clients participating in the federated learning. The gradient is $g_i^{l,m} = \left( g_{i,1}^{l,m}, g_{i,2}^{l,m}, \dots, g_{i,\gamma}^{l,m} \right), g_i^{l,m} \in R^{\gamma \times 1}$. $\gamma$ represents a quantity of gradients of the neural network model of the $m^{th}$ client. In other words, $g_i^{l,m}$ may represent a set of all the gradients of the neural network model of the $m^{th}$ client in the $i^{th}$ round of the federated learning.

Step 1.2: The $m^{th}$ client transmits the gradient (namely, $g_i^{l,m}$) to a central server through an air interface.

Step 1.3: The central server performs gradient collection. Specifically, the central server receives gradients of all the clients, and performs weighted averaging on all the gradients to obtain a global gradient. For example, for a weighted averaging process, refer to the following formula:

$$g_{i+1}^f = \left(g_{i+1,1}^f, g_{i+1,2}^f, \dots, g_{i+1,\gamma}^f\right), g_{i+1}^f \in R^{\gamma \times 1}, \ g_{i+1}^f := \frac{\sum_{m=1}^M g_i^{l,m}}{M}$$

Based on the foregoing formula, $g_{i+1}^f$: may represent the global gradient, that is, all the gradients of $g_1^{l,m}$ to $g_M^{l,m}$ are summed and averaged, or weighted and then averaged.

Step 1.4: The central server broadcasts the global gradient. The mth client receives the global gradient sent by the central server.

Step 1.5: The mth client updates the local neural network model based on the global gradient.

The foregoing step 1.1 to step 1.5 are repeatedly performed until the neural network model converges or the quantity of training rounds reaches an upper limit, so that the federated learning can be completed.

In a communication network in which an AI function is introduced, a network element having an AI function may be defined as an AI node. The AI node may provide an AI service for a terminal device, and the AI node that provides the service for the terminal device may be defined as an AI node on which the terminal device camps.

In an application scenario including an AI node, a process in which the terminal device selects an AI node to camp on may be implemented through cell selection, that is, an AI node associated with a network device (for example, a base station) in a cell accessed by the terminal device is the AI node on which the terminal device camps.

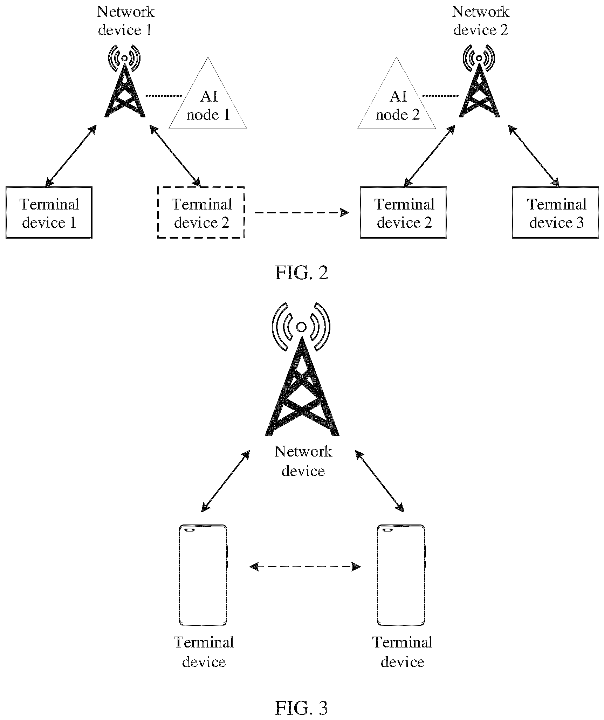

For example, FIG. 2 is a diagram of a process in which a terminal device selects an AI node to camp on. Refer to FIG. 2. A network device 1 is associated with an AI node 1, and a network device 2 is associated with an AI node 2. At a first moment, both a terminal device 1 and a terminal device 2 are communicatively connected to the network device 1, and a terminal device 3 is communicatively connected to the network device 2. Because a process in which the terminal device selects the AI node to camp on is implemented through cell selection, both the terminal device 1 and the terminal device 2 camp on the AI node 1, and the terminal device 3 camps on the AI node 2. At a second moment, it is assumed that the terminal device 2 performs cell handover, disconnects from the network device 1, and successfully accesses the network device 2. In this case, the terminal device 2 camps on the AI node 2.

It should be noted that, in this embodiment of this application, that a network device is associated with an AI node may mean that the network device records information about the AI node. It is assumed that the network device records information about the AI node 1. In this case, when a terminal device accesses the network device and needs to camp on an AI node to obtain an AI service, the network device may send the information about the AI node 1 to the terminal device, and the terminal device may camp on the AI node 1 by using the information about the AI node 1. In other words, the AI node associated with the network device may provide a service for a terminal device connected to the network device. The AI node 1 may be deployed on the network device, or may be deployed on another network element that is communicatively connected to the network device. This is not limited herein.

It can be learned from FIG. 2 that an AI node associated with a network device in a cell accessed by the terminal device is the AI node on which the terminal device camps. Therefore, in a mobility management process, for example, cell selection, only performance of a connection between the terminal device and the network device is considered, and a case in which an AI function is introduced into a network is not considered. Consequently, the terminal device can camp only on the AI node associated with the network device, and cannot select an AI node to camp on. In addition, the AI node may not provide, for the terminal device, an AI service that meets a requirement because of an excessive quantity of terminal devices served, and the terminal device cannot obtain a better AI service. Based on this, when the AI function is introduced into the network, how to provide mobility management to enable the terminal device to obtain a better AI service is an urgent problem to be resolved.

To resolve the foregoing problems, embodiments of this application provide technical solutions. The technical solutions include a communication system, a communication method and a communication apparatus that are applied to the communication system, and the like. The following describes the technical solutions provided in this application with reference to the accompanying drawings.

The technical solutions in embodiments of this application may be applied to a wireless communication system. For example, the wireless communication system may be a 4th generation (4th generation, 4G) communication system (for example, a long term evolution (long term evolution, LTE) system), a 5th generation (5th generation, 5G) communication system (for example, a new radio (new radio, NR) system), a mobile communication system evolved after 5G (for example, a 6G communication system), a narrowband-internet of things (narrowband-internet of things, NB-IoT) system, a short-distance communication system, or the like. The technical solutions in embodiments of this application may be further applied to a satellite communication system or a non-terrestrial network (non-terrestrial network, NTN) communication system. The satellite communication system or the NTN communication system may be integrated with a wireless communication system. The technical solutions in embodiments of this application may be further applied to an intersatellite link communication system, a wireless projection system, a virtual reality (virtual reality, VR) system, an augmented reality (augmented reality, AR) system, an integrated access and backhaul (integrated access and backhaul, IAB) system, a wireless fidelity (wireless fidelity, Wi-Fi) communication system, an optical communication system, and the like. This is not limited herein.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Specifically, the term "example" is used to present a concept in a specific manner.

Network architectures and service scenarios described in embodiments of this application are intended to more clearly describe technical solutions in embodiments of this application, but are not intended to limit the technical solutions provided in embodiments of this application. A person of ordinary skill in the art may know that as the network architectures evolve and a new service scenario emerges, the technical solutions provided in embodiments of this application are also applicable to a similar technical problem.

An embodiment of this application provides a communication system. The communication system is applicable to communication between a second communication apparatus and a first communication apparatus. The communication system provided in this embodiment of this application may include one or more first communication apparatuses and one or more second communication apparatuses. A quantity of second communication apparatuses and a quantity of first communication apparatuses in the communication system are not limited in embodiments of this application. The first communication apparatus is, for example, a terminal device, and the second communication apparatus is, for example, a network device. In addition, in this embodiment of this application, a first node may be further deployed in the second communication apparatus. Alternatively, a first node is deployed in a network element other than the second communication apparatus, and the second communication apparatus is communicatively connected to the first node. The first node may be, for example, an AI node.

It should be noted that in embodiments of this application, an example in which the first communication apparatus is a terminal device, the second communication apparatus is a network device, and the first node is an AI node is used to describe the solutions provided in embodiments of this application. This is uniformly described herein, and details are not described below.

In an example, FIG. 3 is a diagram of an architecture of a communication system according to an embodiment of this application. As shown in FIG. 3, the communication system may include a network device and a terminal device (for example, in FIG. 3, two terminal devices are included), and the network device and the terminal device may be connected in a wireless manner. The network device and the terminal device may exchange data, control signaling, and/or the like. Optionally, at least one AI node may be deployed in the network device in FIG. 3, or the network device may be communicatively connected to at least one network element on which an AI node is deployed. The network element on which the AI node is deployed may also be referred to as an AI network element.

Optionally, the at least one AI node includes an AI node associated with or co-located with the network device, and may further include another AI node that can communicate with the network device. For example, when the AI node and the network device are integrated, the network device may be a radio access network (radio access network, RAN) node having an AI function. Optionally, if the terminal device has camped on an AI node, the at least one AI node herein may be an adjacent node of the AI node on which the terminal device currently camps.

Optionally, the network device in this embodiment of this application is a device that connects the terminal device to a wireless network. The network device may be a RAN node in a radio access network, or may be referred to as a base station, or may be referred to as a node (or a device). The base station may be a distributed antenna system, and a radio frequency head end of the base station may communicate with a terminal device. For example, the network device may include an evolved base station (evolved NodeB, eNB, or eNodeB) in an LTE system or an LTE-Advanced (LTE-Advanced, LTE-A) system, for example, a conventional macro base station and a micro base station in a heterogeneous network scenario; or may include a next generation NodeB (next generation NodeB, gNB) in a 5G NR system; or may further include a transmitting and receiving point (transmitting and receiving point, TRP), a transmitting point (transmitting point, TP), a home base station (for example, a home evolved NodeB, a home NodeB, or an HNB), a base band unit (base band unit, BBU), a base band pool BBU pool or a Wi-Fi access point (access point, AP), a mobile switching center and a device that undertakes a base station function in device-to-device (device-to-device, D2D), vehicle-to-everything (vehicle-to-everything, V2X), or machine-to-machine (machine-to-machine, M2M) communication; or may be a network device in a public land mobile network (public land mobile network, PLMN) evolved after 5G; or may further be a wearable device, a vehicle-mounted device, or the like; or may further include a central unit (central unit, CU) and a distributed unit (distributed unit, DU) in a cloud radio access network (cloud radio access network, CloudRAN) system; or may include a network device in an NTN, that is, may be deployed on a high-altitude platform or a satellite. In the NTN, the network device may be used as a layer 1 (L1) relay (relay), or may be used as a base station, or may be used as a DU, or may be used as an IAB node. This is not limited in embodiments of this application. Certainly, the network device may also be a node in a core network.

Optionally, the terminal device in this embodiment of this application may be a device configured to implement a wireless communication function, for example, a terminal or a chip that may be used in a terminal. The terminal may be user equipment (user equipment, UE), a subscriber unit (subscriber unit), an access terminal, a terminal unit, a terminal station, a mobile station, a remote station, a remote terminal, a mobile device, a wireless communication device, a terminal agent or a terminal apparatus, various terminals (for example, a robot or a mechanical arm equipped with a wireless transmission module) in an industrial scenario, or the like in a 5G network or a PLMN evolved after 5G. The access terminal may be a cellular phone (cellular phone), a smartphone (smartphone), a cordless phone, a session initiation protocol (session initiation protocol, SIP) phone, a wireless local loop (wireless local loop, WLL) station, a personal digital assistant (personal digital assistant, PDA), a laptop computer (laptop computer), a wireless modem (modem), a computer, a tablet computer, a handheld device or computing device having a wireless communication function, another processing device, vehicle-mounted device, or wearable device connected to a wireless modem, a VR terminal, an AR terminal, a wireless terminal in industrial control (industrial control), a wireless terminal in self driving (self driving), an uncrewed aerial vehicle, a sensor, an actuator, a satellite terminal, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal (for example, an Internet of Vehicles device) in V2X, a terminal in device-to-device (device-to-device) communication, a terminal in machine type communication (machine type communication, MTC), a terminal in machine-to-machine (machine-to-machine, M2M) communication, or the like.

Optionally, the terminal device may have a specific AI function. For example, a current mobile phone may take a picture, identify a name of an object in the picture, mark the name, and display the name on a display screen. Optionally, the terminal device may further obtain an AI service provided by a network side.

Optionally, the AI node in this embodiment of this application may be a network element having the AI function, and the AI node may be logically considered as an independent network element. During deployment, the AI node may be deployed on a RAN node, or may be deployed on another network element in a network, for example, a user plane function (user plane function, UPF) network element. This is not limited in embodiments of this application. For example, when the AI node is deployed on the RAN node, the AI node is logically separated from the RAN node.

Optionally, in this embodiment of this application, the network device, the terminal device, and the AI node may be deployed on land, where the deployment includes indoor or outdoor, or handheld or vehicle-mounted deployment, may be deployed on water, or may be deployed on an airplane, a balloon, and an artificial satellite in the air. An application scenario of the network device, the terminal device, and the AI node are not limited in embodiments of this application.

A specific structure of an execution body of the method provided in embodiments of this application is not specifically limited in embodiments of this application, provided that a program that records code for the method provided in embodiments of this application can be run to perform communication according to the method provided in embodiments of this application. For example, the execution body of the communication method provided in embodiments of this application may be a terminal device, a network device, or a functional module that can invoke and execute a program in a terminal device or a network device.

In other words, a related function of the first communication apparatus or the second communication apparatus in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, or a software function running on dedicated hardware, or a combination of hardware and software, or a virtualization function instantiated on a platform (for example, a cloud platform).

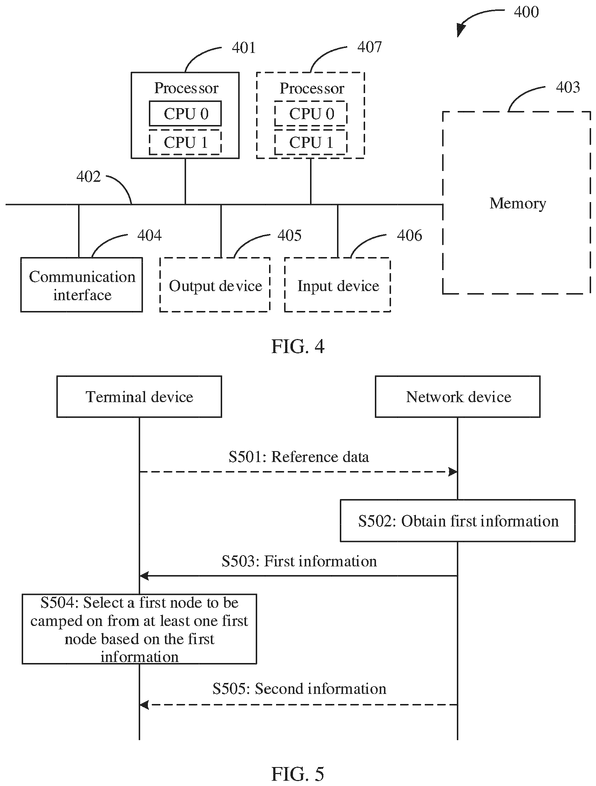

For example, the related function of the first communication apparatus or the second communication apparatus in embodiments of this application may be implemented by using a communication apparatus 400 in FIG. 4. FIG. 4 is a diagram of a structure of a communication apparatus 400 according to an embodiment of this application. The communication apparatus 400 may include one or more processors 401, a communication line 402, and at least one communication interface (FIG. 4 is merely described by using an example in which a communication interface 404 and one processor 401 are included), and optionally, may further include a memory 403.

The processor 401 may be a central processing unit (central processing unit, CPU), a microprocessor, an application-specific integrated circuit (application-specific integrated circuit, ASIC), or one or more integrated circuits configured to control program execution of the solutions in this application.

The communication line 402 may include a path configured to connect different components. For example, the communication line 402 may be a bus, for example, an address bus, a data bus, or a control bus.

The communication interface 404 may be a transceiver module, and may be configured to communicate with another device or communication network. For example, the transceiver module may be an apparatus such as a transceiver or a transceiver machine. Optionally, the communication interface 404 may be alternatively a transceiver circuit located in the processor 401, and is configured to implement signal input and signal output of the processor.

The memory 403 may be an apparatus having a storage function, for example, may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code having a form of an instruction or a data structure and that can be accessed by a computer. However, this is not limited thereto. The memory may exist independently, and is connected to the processor through the communication line 402. Alternatively, the memory may be integrated with the processor.

The memory 403 is configured to store computer-executable instructions for performing the solutions in this application, and the processor 401 controls execution. The processor 401 is configured to execute the computer-executable instructions stored in the memory 403, to implement the communication method provided in embodiments of this application.

Alternatively, in this embodiment of this application, the processor 401 may implement a processing-related function in the communication method provided in the following embodiments of this application, and the communication interface 404 is responsible for communicating with another device or communication network. This is not specifically limited in embodiments of this application.

The computer-executable instructions in this embodiment of this application may also be referred to as application code. This is not specifically limited in embodiments of this application.

During specific implementation, in an embodiment, the processor 401 may include one or more CPUs, such as a CPU 0 and a CPU 1 in FIG. 4.

During specific implementation, in an embodiment, the communication apparatus 400 may include a plurality of processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 400 may further include an output device 405 and an input device 406. The output device 405 communicates with the processor 401, and may display information in a plurality of manners.

The foregoing describes the communication system provided in this application. The following describes, with reference to the accompanying drawings, the communication method provided in embodiments of this application.

FIG. 5 is an interaction diagram 1 of a communication method according to an embodiment of this application. The communication method may be applied to the foregoing communication system, and may be performed by the network device or the terminal device in the communication system shown in FIG. 3. According to the communication method, the terminal device can select, based on a processing capability of an AI node, the AI node to camp on, so that the terminal device can obtain an AI service that meets a requirement. The method may include S502 to S504, which are sequentially described below.

S502: The network device obtains first information.

The first information indicates an AI processing capability of at least one AI node, and the first information is used by the terminal device to select the AI node to be camped on from the at least one AI node.

In some possible embodiments, the first information may include one or more of the following: an available resource of the at least one AI node, a computing power of the at least one AI node, a lightweight model of the at least one AI node, and model precision of a neural network model of the at least one AI node. The following sequentially describes the several pieces of information:

1. Available resource of the AI node

The available resource of the AI node may be a size of a resource that may be available in software and hardware resources of the AI node, and may represent the AI processing capability of the AI node.

The software and hardware resources of the AI node may include a hardware resource of the AI node and a software resource of the AI node. The hardware resource of the AI node may include processor operating performance of the AI node, memory performance of the AI node, and the like. The software resource of the AI node may include to-be-processed task information of the AI node.

Optionally, the available resource of the AI node may include one or more of the following: processor operating performance information of the AI node, memory performance information of the AI node, and the to-be-processed task information of the AI node.

The processor operating performance information of the AI node may include one or more of the following: a frequency (including a main frequency, a multiplied frequency, an external frequency, and the like) of a processor of the AI node, a quantity of cores, a size of a level 1 cache (L1 cache) of the processor, a rate of the level 1 cache of the processor, and the like. Optionally, the size of the level 1 cache of the processor may be an available cache size in the size of the level 1 cache of the processor. For example, it is assumed that the size of the level 1 cache of the processor of the AI node is 512 kilobytes (kilobyte, KB), and 400 KB in the cache is occupied. In this case, the available cache size in the size of the level 1 cache is 112 KB.

The memory performance information of the AI node may include one or more of the following: a memory capacity of the AI node, a storage read/write rate, and the like. Optionally, the memory capacity of the AI node may be a remaining capacity of the AI node. For example, it is assumed that the memory capacity of the AI node is 16 gigabytes (gigabyte, GB), and 8 GB in the memory capacity is occupied. In this case, the remaining capacity of the AI node is 8 GB.

The to-be-processed task information of the AI node may include a quantity of to-be-processed tasks of the AI node or a length of a task queue in the AI node.

2. Computing power of the AI node

The computing power of the AI node is a computing capability of the AI node, and may represent the AI processing capability of the AI node. In some possible embodiments, the computing power of the AI node may be determined by using the available resource of the AI node.

Optionally, the computing power of the AI node may be determined based on one or more of the processor operating performance information of the AI node, the memory performance information of the AI node, and the to-be-processed task information of the AI node. For example, the computing power of the AI node may be determined according to the following formula:

$$P=F\ (F\_cpu,\ L1,\ F\_mem,\ ...,\ Mission\_queue)$$

P represents the computing power of the AI node. A parameter in the function F may include one or more of the processor operating performance information of the AI node, the memory performance information of the AI node, and the to-be-processed task information of the AI node. For example, the parameter includes F_cpu, L1, F_mem, and Mission_queue. F_cpu is the frequency of the processor of the AI node. L1 is the size of the level 1 cache of the processor of the AI node. F_mem is the memory capacity or storage read/write rate of the AI node. Mission_queue is the length of the task queue in the AI node. In addition, the function F may be determined by the network device or defined by a protocol. This is not limited herein.

The following describes an implementation of "P=F (F_cpu, L1, F_mem, ..., Mission_queue)" by using an example in which the parameter in the function F includes the main frequency of the processor of the AI node, the storage read/write rate of the AI node, and the quantity of to-be-processed tasks of the AI node.

First, it is defined as follows: AI_node_F is the main frequency of the processor of the AI node in F_cpu. AI_node_RAM is the storage read/write rate of the AI node in F_mem. AI_node_overload represents the quantity of to-be-processed tasks (namely, Mission_queue) of the AI node. F_ref represents a reference main frequency of the processor. RAM_ref represents a reference read/write rate of a memory. Overload_ref represents a reference task quantity.

Then, the computing power (namely, P) of the AI node may be determined according to the following formula:

$$P = \frac{AI\_node\_F}{F\_ref} \times A + \frac{AI\_node\_RAM}{RAM\_ref} \times B - \frac{AI\_node\_overload}{Overload\_ref} \times C$$

F_ref is defined as follows: A value of F_ref may be a highest main frequency of processors of a plurality of AI nodes, or may be a value defined in a protocol. This is not limited herein. A, B, and C are weight values. A, B, and C may all be constants greater than or equal to 0. For example, A, B, and C may all be 100. It should be understood that F_ref may be used to normalize AI_node_F. Similarly, definitions of RAM_ref and Overload_ref are similar to the definition of F_ref. Details are not described herein again.

It should be noted that, when the first information is the computing power of the AI node, in an execution process of obtaining the first information by the network device in S502, the network device may first obtain the available resource of the AI node, and then determine the computing power of the AI node based on the available resource of the AI node. In this way, the computing power of the AI node has been calculated by the network device, and may represent information about the AI processing capability of the AI node, so that a computing workload of the terminal device can be reduced, and power consumption of the terminal device can be reduced.

3. Lightweight model of the AI node

The lightweight model of the AI node may be determined by the neural network model of the AI node. The lightweight model may be used to measure performance of the neural network model of the AI node, to represent the AI processing capability of the AI node.

Specifically, the lightweight model of the AI node may be a simplified neural network model of the neural network model of the AI node. Alternatively, the lightweight model of the AI node may be considered as a compressed model of the neural network model of the AI node. Compared with the neural network model of the AI node, the lightweight model of the AI node has fewer model layers and fewer nodes. In addition, the lightweight model of the AI node has fewer parameters, a reduced computing workload, and less running time. In addition, a size of the lightweight model of the AI node is smaller, which is more convenient for transmission.

A function of the neural network model of the AI node may be the same as that of the lightweight model of the AI node, that is, both the neural network model and the lightweight model of the AI node may be used to complete a same task. In this way, model precision of the lightweight model of the AI node may be determined to deduce the model precision of the neural network model of the AI node, so as to determine the AI processing capability of the AI node.

In some possible embodiments, the lightweight model of the AI node may be determined by the AI node.

Optionally, the lightweight model of the AI node may be generated by the AI node based on a first task and the neural network model. Specifically, the terminal device may process the first task based on the lightweight model of the AI node, to obtain processing performance, and use the processing performance to identify performance that is of the neural network model of the AI node and that exists when the neural network model of the AI node processes the first task. In this way, when the terminal device selects the AI node to be camped on, if the terminal device needs to process the first task, the terminal device may select, based on the performance existing when the first task is processed, a more appropriate AI node as the AI node to be camped on, so that the terminal device obtains the AI service that meets the requirement.

During actual application, the AI node may generate different lightweight models for different tasks based on model generation configuration information and the neural network model of the AI node. In other words, the AI node may generate a plurality of lightweight models for one neural network model, and each lightweight model corresponds to one task. In this way, when the terminal device needs to process a task, the terminal device may determine, by using a lightweight model corresponding to the task, performance that is of the neural network model of the AI node and that exists when the task is processed, to more accurately select an AI node whose AI processing capability matches the requirement as the AI node to be camped on, so that the terminal device obtains the AI service that meets the requirement.

The model generation configuration information may be a constraint condition for generating the lightweight model based on the neural network model of the AI node. For example, the model generation configuration information may include an iteration threshold in a process of iteratively generating the lightweight model based on the neural network model of the AI node, a computing power threshold of the generated lightweight model of the AI node, a layer quantity threshold of the generated lightweight model of the AI node, and the like. The iteration threshold herein may be defined as a maximum quantity of iterations of the AI node in the process of iteratively generating the lightweight model. Similarly, definitions of the computing power threshold and the layer quantity threshold are similar to the definition of the iteration threshold. Details are not described herein again.

It should be noted that, during actual application, the model generation configuration information may be determined by a network-side device (for example, an AI node, an AI network element, or a base station) or defined in a protocol. This is not limited herein.

4. Model precision of the neural network model of the AI node

The model precision of the neural network model of the AI node may represent model performance of the neural network model of the AI node, to represent the AI processing capability of the AI node. For example, the model precision of the neural network model of the AI node may be an accuracy degree that is of an output result and that exists when the neural network model processes the first task. The first task herein may be an identification task, a classification task, or the like. This is not limited herein.

In some possible embodiments, the model precision of the neural network model of the AI node may be determined by the AI node based on reference data reported by the terminal device. The reference data may be used to determine the model precision of the neural network model of the AI node.

It should be noted that for descriptions of the reference data and a process of reporting the reference data by the terminal device, refer to S501 in the following method embodiment. Details are not described herein again.

It should be noted that when the first information includes the model precision of the neural network model of the AI node, the model precision of the neural network model of the AI node may be calculated by the AI node, and may represent information about the AI processing capability of the AI node, so that the computing workload of the terminal device can be reduced, and power consumption of the terminal device can be reduced.

In the foregoing descriptions of the first information, the AI processing capability of the AI node may be represented by one or more of the available resource of the AI node, the computing power of the AI node, the lightweight model of the AI node, and the model precision of the neural network model of the AI node. In this way, the AI processing capability of the AI node can be more accurately represented, and the terminal device can more accurately select the AI node whose AI processing capability matches the requirement as the AI node to be camped on, so that the terminal device obtains the AI service that meets the requirement.

In some possible embodiments, a manner in which the network device obtains the first information in S502 may include: The at least one AI node determines respective AI processing capability information. The at least one AI node sends the respective AI processing capability information to the network device. The network device receives the AI processing capability information from the at least one AI node, and determines the first information.

The AI processing capability information may include one or more of the following: the available resource of the AI node, the computing power of the AI node, the lightweight model of the AI node, and the model precision of the neural network model of the AI node. For descriptions of the available resource of the AI node, the computing power of the AI node, the lightweight model of the AI node, and the model precision of the neural network model of the AI node, refer to the foregoing related descriptions. Details are not described herein again.

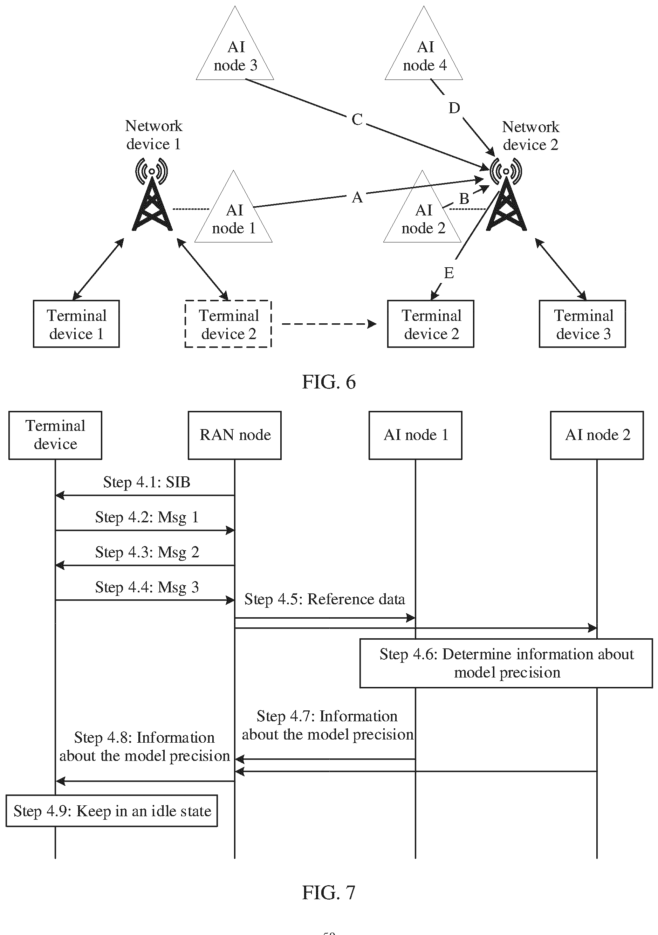

The following provides detailed descriptions with reference to an example. FIG. 6 is a diagram of a scenario in which a terminal device selects an AI node to camp on according to an embodiment of this application. An AI node 1 is deployed on a network device 1. An AI node 2 is deployed on a network device 2. An AI node 3 and an AI node 4 are deployed on another network element (for example, a UPF) in a network. For example, the network device is the network device 2. A manner in which the network device 2 obtains first information may include: The AI node 1 to the AI node 4 determine respective AI processing capability information. The AI node 1 to the AI node 4 send the respective AI processing capability information to the network device 2, where the AI processing capability information of the AI node 1 to the AI node 4 is respectively A, B, C, and D in FIG. 6. The network device 2 separately receives the AI processing capability information from the AI node 1 to the AI node 4, and determines the first information. The first information may include the AI processing capability information of the AI node 1 to the AI node 4. In this way, the first information obtained by the network device 2 may indicate AI processing capabilities of the AI node 1 to the AI node 4.

In a possible implementation, one AI node may be associated with one or more network devices (namely, RAN nodes). The AI node may transmit AI processing capability information of the AI node to the one or more network devices by using an interface between the AI node and the RAN nodes. Correspondingly, one network device may receive AI processing capability information sent by a plurality of AI nodes, for example, the network device 2 in FIG. 6. Optionally, the AI node is associated with the one or more network devices based on a pre-determined geographical area.

In some possible embodiments, the first information may further indicate whether each of the at least one AI node allows camping. In this way, the terminal device may select, based on the first information, the AI node to be camped on from at least one AI node that allows camping.

In some other possible embodiments, each of the at least one AI node indicated by the first information allows camping. Specifically, the network device may receive the AI processing capability information from the plurality of AI nodes, where the AI processing capability information further indicates whether the AI node allows camping. Then, the network device determines, based on the AI processing capability information, all AI nodes that allow camping and that are in the plurality of AI nodes as the at least one AI node. The network device determines the first information based on the AI processing capability information of the at least one AI node. In this way, each of the at least one AI node indicated by the first information allows camping, so that the computing workload of the terminal device can be reduced, and power consumption of the terminal device can be reduced.

S503: The network device sends the first information to the terminal device. Correspondingly, the terminal device receives the first information from the network device.

In some possible embodiments, the first information may be carried in broadcast-level information and/or terminal-level information.

The terminal-level information may also be referred to as terminal-level signaling, UE-specific (UE-specific) signaling, UE-level information, or a similar concept. The broadcast-level information may also be referred to as broadcast-level signaling or a similar concept. This is not limited in embodiments of this application.

When the first information is carried in the broadcast-level information, the network device may broadcast the first information to the terminal device. Correspondingly, the terminal device receives the first information broadcast by the network device. Optionally, the broadcast-level information may include a SIB. In other words, the first information may be carried in the SIB. In this way, the first information may be sent to a plurality of terminal devices in a broadcast manner, to reduce signaling overheads. In addition, the SIB is carried on a physical downlink shared channel (physical downlink shared channel, PDSCH). Therefore, the SIB may schedule a large transmission resource, to ensure that the first information can be carried.

When the first information is carried in the terminal-level information, the network device may send the first information to the terminal device. Correspondingly, the terminal device receives the first information sent by the network device. Optionally, the terminal-level information may be an RRC message. In other words, the first information may be carried in the RRC message. Optionally, the first information may be alternatively carried in a NAS message, and the NAS information that carries the first information may be further carried in an RRC message. In this way, the first information may be sent to a terminal device, so that message transmission is more accurate.

For example, the application scenario shown in FIG. 6 is still used as an example. After determining the first information, the network device 2 may broadcast the first information by using the SIB. After accessing the network device 2, a terminal device 2 may receive the first information (namely, E in FIG. 6) from the SIB, to extract the AI processing capability information of the AI node 1 to the AI node 4.

It should be understood that a type of information carried by the first information is not limited in embodiments of this application. For example, the first information may be alternatively carried in signaling such as a media access control (media access control, MAC) control element (control element, CE). In addition, with development of communication technologies, the first information may be alternatively carried in newly designed signaling.

S504: The terminal device selects the AI node to be camped on from the at least one AI node based on the first information.

In some possible embodiments, that the terminal device selects the AI node to be camped on from the at least one AI node based on the first information in S504 may include: When a node reselection condition is met, the terminal device selects the AI node to be camped on from the at least one AI node based on the first information.

The node reselection condition may include the following several implementations:

Manner 1: The node reselection condition may include that a computing power of a node on which the terminal device currently camps is less than the computing power threshold. In other words, when the AI node on which the terminal device currently camps cannot provide the AI service that meets the requirement, the terminal device may select, based on the processing capability of the AI node, the AI node to camp on. In this way, when it is ensured that the terminal device can obtain the AI service that meets the requirement, a quantity of times the terminal device reselects an AI node can be reduced, and power consumption of the terminal device can be reduced.

For example, the application scenario shown in FIG. 6 is still used as an example. After the terminal device 2 obtains the AI processing capability information of the AI node 1 to the AI node 4, when the terminal device 2 determines that a computing power of an AI node (for example, the AI node 1) on which the terminal device 2 currently camps is less than the computing power threshold, it is determined that the node reselection condition is met, and the terminal device 2 needs to select the AI node to be camped on from the AI node 1 to the AI node 4 based on the first information.

A manner of obtaining the computing power of the node on which the terminal device currently camps may include: The terminal device determines, based on the first information, the computing power of the node on which the terminal device currently camps. Alternatively, the network device sends camped-on node information to the terminal device, where the camped-on node information indicates the computing power of the node on which the terminal device currently camps. The terminal device receives, from the network device, the computing power of the node on which the terminal device currently camps.

Manner 2: The node reselection condition may include that a current time point of the terminal device is a first time point. The first time point may be a periodic time point (where for example, an interval between two adjacent first time points is 5 seconds) or an aperiodic time point. In other words, the terminal device may periodically or aperiodically select, based on the processing capability of the AI node, the AI node to camp on.

Manner 3: The node reselection condition may include that the terminal device is handed over between cells. In other words, when cell handover occurs, the terminal device may select, based on the processing capability of the AI node, the AI node to camp on.

It should be understood that, during actual application, the node reselection condition may be set according to a requirement. This is not limited herein.

Optionally, an implementation in which the terminal device selects the AI node to be camped on from the at least one AI node based on the first information may include: The terminal device determines a computing power of each of the at least one AI node based on the first information. The terminal device obtains a delay of each of the at least one AI node. When a first condition is met, the terminal device determines a second node as the AI node to be camped on.

The first condition may include that the second node exists in the at least one AI node. The second node is a first node that meets one or more of the following conditions: a computing power of the second node is greater than (or greater than or equal to) a first computing power, the computing power of the second node is greater than (or greater than or equal to) a second computing power, a delay of the second node is less than (or less than or equal to) a first delay, and the delay of the second node is less than (or less than or equal to) a second delay. The first computing power may be the computing power of the node on which the terminal device currently camps. The second computing power may be a sum of the computing power of the node on which the terminal device currently camps and a first threshold. The first delay may be a delay of the node on which the terminal device currently camps. The second delay may be a sum of the delay of the node on which the terminal device currently camps and a second threshold.

The delay may include at least one of a transmission delay, a processing delay, and a communication delay. Specifically, the transmission delay may include a transmission latency of data between a first communication apparatus and a first node. The processing delay may include a processing latency of data at the first node. The communication delay may include the transmission delay and the processing delay.

In a possible implementation, when there are a plurality of second nodes, the terminal device may determine any second node in the plurality of second nodes as the AI node to be camped on, or may determine a second node with a highest computing power in the plurality of second nodes as the AI node to be camped on, or may determine a second node with a lowest delay in the plurality of second nodes as the AI node to be camped on. This is not limited herein.

In a possible implementation, an implementation in which the terminal device determines the computing power of each of the at least one AI node based on the first information may include: The first information includes the available resource of the at least one AI node, and the terminal device determines the computing power of each of the at least one AI node based on the available resource of the AI node in the first information. Alternatively, the first information includes the computing power of the at least one AI node, and the terminal device obtains the computing power of each of the at least one AI node based on the first information.

In a possible implementation, an implementation in which the terminal device obtains the delay of each of the at least one AI node may include: The terminal device determines a communication delay of each of the at least one AI node based on a sending time point of first data and a receiving time point of feedback data of the first data. The first data is data sent by the terminal device to the AI node, and the feedback data is data fed back by the AI node to the terminal device based on the first data. Alternatively, the terminal device receives delay information from the network device, where the delay information indicates a delay of each first node in the at least one AI node, and the terminal device may obtain the delay of each first node in the at least one AI node based on the delay information.

In addition, the delay information may be carried in the first information or information other than the first information. This is not limited herein.

For example, the application scenario shown in FIG. 6 is still used as an example. After the terminal device 2 obtains the AI processing capability information of the AI node 1 to the AI node 4, the terminal device 2 may determine a computing power and a delay of each of the AI node 1 to the AI node 4 based on the AI processing capability information of the AI node 1 to the AI node 4. If the first condition is met, the terminal device 2 may use a second node in the AI node 1 to the AI node 4 as the AI node to be camped on. For example, assuming that a computing power of the AI node 3 is greater than the first computing power, a computing power of the AI node 4 is greater than the second computing power, and the computing power of the AI node 3 is less than the computing power of the AI node 4, the terminal device 2 may determine the AI node 4 as the AI node to be camped on. In other words, the terminal device may select, based on the processing capability of the AI node, an AI node with a stronger processing capability to camp on, to improve AI processing performance of the terminal device.

In S504, the first threshold and the second threshold may enable an AI processing capability of the second node to be greater than that of the node on which the terminal device currently camps, so that the terminal device can obtain a better AI service. In addition, the computing power threshold, the first threshold, and the second threshold may be determined by the network device or defined in a protocol. This is not limited herein.

Optionally, before S502, the communication method shown in FIG. 5 may further include the following step.

S501: The terminal device sends the reference data to the network device. Correspondingly, the network device receives the reference data from the terminal device.

The reference data may be used to determine the model precision of the neural network model of the AI node. Optionally, the network device may further forward the reference data to the AI node. The AI node may receive the reference data from the network device, and then determine the model precision of the neural network model of the AI node based on the reference data.

Specifically, the reference data may include an input dataset and a label dataset. For example, assuming that the neural network model of the AI node may be used to recognize an image of a cat in a picture, the input dataset in the reference data may include a plurality of photos, and these photos may include an image that has a cat or an image that does not have a cat. The label dataset in the reference data may include recognition information corresponding to each photo, and the recognition information indicates whether a corresponding photo has a cat. In this case, the AI node may input the input dataset into the neural network model of the AI node, to recognize whether each photo in the input dataset includes an image of a cat, and obtain a recognition result. Then, the AI node may determine a correctness rate of the recognition result based on the label dataset, to obtain the model precision of the neural network model of the AI node.

In this way, in S501, the AI processing capability may be determined based on the reference data reported by the terminal device. Because the reference data reported by the terminal device may come from a to-be-processed task of the terminal device, the determined AI processing capability may represent performance that is of the AI node and that exists when the AI node processes the to-be-processed task of the terminal device. In this way, the terminal device can more accurately select an AI node whose AI processing capability matches the requirement as the AI node to be camped on, so that the terminal device obtains the AI service that meets the requirement.

Optionally, after S503, the communication method shown in FIG. 5 may further include: The terminal device measures the performance of the neural network model of the AI node based on the lightweight model of the AI node.

For example, assuming that the lightweight model of the AI node may be used to recognize an image of a cat in a picture, the terminal device may obtain the input dataset and the label dataset. The input dataset may include the plurality of photos, and these photos may include the image that has a cat or the image that does not have a cat. The label dataset in the reference data may include the recognition information corresponding to each photo, and the recognition information indicates whether the corresponding photo has a cat. In this case, the terminal device may input the input dataset into the lightweight model of the AI node, to recognize whether each photo in the input dataset includes an image of a cat, and obtain a recognition result. Then, the terminal device may determine a correctness rate of the recognition result based on the label dataset, to obtain the model precision of the lightweight model of the AI node. The model precision of the lightweight model of the AI node may represent the model precision of the neural network model of the AI node.

For descriptions of the lightweight model, refer to the foregoing related descriptions. Details are not described herein again.

Optionally, after S504, the communication method shown in FIG. 5 may further include the following step.

S505: The network device sends second information to the terminal device. Correspondingly, the terminal device receives the second information from the network device.

The second information may indicate a configuration parameter of the AI node to be camped on. The configuration parameter may include one or more of the following: a permission parameter, a model parameter, and dataset information. The permission parameter may indicate whether the AI node to be camped on allows camping. The model parameter may be a parameter of a neural network model of the AI node to be camped on. The dataset information may indicate a dataset used to train the neural network model of the AI node to be camped on.

Optionally, after receiving the second information, the terminal device may complete camping on the AI node based on the second information.

If the configuration parameter indicated by the second information includes the permission parameter, and the permission parameter indicates that the AI node to be camped on does not allow camping, the terminal device may perform S501 to S505 again to reselect an AI node that is available for camping to camp on.

In this way, by performing S505, the terminal device may update, based on the second information, the configuration parameter of the AI node to be camped on, to complete AI node reselection.

In some possible embodiments, the terminal device in S501 to S505 may keep in an idle state. In this case, the first information may further indicate the terminal device to keep in the idle state. In this way, the terminal device may select, based on the processing capability of the AI node without exiting the idle state, the AI node to camp on, to reduce power consumption of the terminal device.

In some possible embodiments, the communication method shown in FIG. 5 may be applied to a plurality of terminal devices. In this way, each of the plurality of terminal devices can select an AI node whose AI processing capability matches a requirement as an AI node to be camped on, and can avoid camping on an AI node that is heavily loaded or is about to be overloaded. In other words, the plurality of terminal devices may camp on a plurality of AI nodes in a distributed manner, to avoid an excessive quantity of terminal devices camping on one AI node, and optimize performance of the AI node.

The following further describes the method embodiment shown in FIG. 5 with reference to several examples.

Example 1: When first information includes an available resource of an AI node, implementations of S502 to S504 may include the following several steps.

Step 2.1: A network device obtains the first information, where the first information includes an available resource of at least one AI node.

Step 2.2: The network device sends the first information to a terminal device, and correspondingly, the terminal device receives the first information sent by the network device.

Step 2.3: The terminal device determines a computing power and a delay of each of the at least one AI node based on the first information.

Step 2.4: When a first condition is met, the terminal device determines a second node in the at least one AI node as an AI node to be camped on. For related descriptions of the first condition and the second node, refer to the foregoing manner 3. Details are not described herein again.

It should be understood that for specific implementations and effects of step 2.1 to step 2.4, refer to related descriptions in the method embodiment shown in FIG. 5. Details are not described herein again.

Example 1 may also be referred to as: The terminal device selects, based on load of the AI node, the AI node to camp on.

Example 2: When first information includes a lightweight model of an AI node, implementations of S502 to S504 may include the following several steps.

Step 3.1: A network device obtains the first information, where the first information includes a lightweight model of at least one AI node.

Step 3.2: The network device sends the first information to a terminal device, and correspondingly, the terminal device receives the first information sent by the network device.

Step 3.3: The terminal device determines model precision of a lightweight model of each of the at least one AI node based on the first information.

Step 3.4: When a second condition is met, the terminal device determines a third node in the at least one AI node as an AI node to be camped on.

The second condition may include one or more of the following: Model precision of a lightweight model of the third node is greater than (or greater than or equal to) a first precision, and the model precision of the lightweight model of the third node is greater than (or greater than or equal to) a sum of the first precision and a third threshold. The first precision is model precision of a lightweight model of an AI node on which the terminal device currently camps. The third threshold may be determined by the network device or defined in a protocol. This is not limited herein.

It should be understood that for specific implementations and effects of step 3.1 to step 3.4, refer to related descriptions in the method embodiment shown in FIG. 5. Details are not described herein again.

Example 2 may also be referred to as: The terminal device selects, based on measurement of performance of the AI node, the AI node to camp on.

Example 3: When first information includes model precision of a neural network model of an AI node, refer to FIG. 7. FIG. 7 is a schematic flowchart 2 of a communication method according to an embodiment of this application. It is assumed that a network device is a RAN node, the RAN node is communicatively connected to an AI node 1 and an AI node 2, and a terminal device is in an idle state. According to the method embodiment shown in FIG. 7, the terminal device can obtain a better AI service without exiting the idle state, and power consumption of the terminal device can be reduced at the same time. In addition, before the method embodiment shown in FIG. 7 is described, an AI early data transmission EDT is first described. The AI EDT refers to transmission that is of AI data and that exists during a random access process and before establishment of an RRC connection. Through the AI EDT, the terminal device may send data related to an AI function (for example, the foregoing reference data) to the RAN node in the random access process and before establishment of the RRC connection, and receive data fed back by the RAN node (for example, the model precision of the neural network model of the AI node). The data related to the AI function may be carried in a message 3 (message 3, Msg 3) or a message A (message A, Msg A), and the data fed back by the RAN node may be carried in a message 4 (message 4, Msg 4) or a message B (message B, Msg B).

Specifically, the method embodiment shown in FIG. 7 may include the following steps.

Step 4.1: The RAN node sends AI EDT configuration information to the terminal device. The AI EDT configuration information may include information about a preamble (preamble) configuration, a supported maximum AI EDT size (size), and the like. Correspondingly, the terminal device receives the AI EDT configuration information from the RAN node. Optionally, the AI EDT configuration information is carried in a SIB.

Step 4.2: The terminal device determines, based on the AI EDT configuration information, a preamble related to the AI EDT, and sends the preamble related to the AI EDT to the RAN node by using a message 1 (message 1, Msg 1). Correspondingly, the RAN node receives, from the terminal device by using the Msg 1, the preamble related to the AI EDT.

Step 4.3: The RAN node responds to a request of the terminal device by using a message 2 (message 2, Msg 2), and allocates a transmission resource of the Msg 3 by using the Msg 2. Correspondingly, the terminal device receives the Msg 2 from the RAN node.

Step 4.4: The terminal device sends the reference data to the RAN node by using the Msg 3. Correspondingly, the RAN node receives the reference data from the terminal device by using the Msg 3. For descriptions of the reference data, refer to the foregoing method embodiment. Details are not described herein again.

In a possible implementation, steps 4.1 to 4.3 may be replaced with that the terminal device sends the Msg A to the RAN node. The Msg A includes the preamble and the data related to the AI function. The data related to the AI function may be, for example, the foregoing reference data.

Step 4.5: The RAN node forwards the reference data to the AI node 1 and the AI node 2. Correspondingly, the AI node 1 and the AI node 2 separately receive the reference data from the RAN node.

Step 4.6: The AI nodes (including the AI node 1 and the AI node 2) determine information about model precision of neural network models of the AI nodes based on the reference data.

For an implementation of "determining model precision of neural network models of the AI nodes based on the reference data", refer to S501. Details are not described herein again.

Step 4.7: The AI nodes send the information about the model precision to the RAN node. Correspondingly, the RAN node receives the information about the model precision from the AI nodes (including the AI node 1 and the AI node 2).

Step 4.8: The RAN node forwards the information about the model precision from the AI nodes to the terminal device by using the Msg 4. Correspondingly, the terminal device receives the information about the model precision of the AI nodes from the RAN node by using the Msg 4.

In a possible implementation, the RAN node forwards the information about the model precision from the AI nodes to the terminal device by using the Msg B.

The terminal device may further select, based on the model precision of the AI nodes (including the AI node 1 and the AI node 2), an AI node to be camped on. For a specific implementation, refer to S504. Details are not described herein again.

Step 4.9: The terminal device keeps in an idle state. For example, the RAN node may further indicate, by using the Msg 4, the terminal to continue to keep in the idle state.

In step 4.1 to step 4.9, the terminal device may send the reference data to the AI node without exiting the idle state, so that the AI node measures the model precision, to reduce power consumption. In addition, the terminal device can select, based on the model precision of the AI node, the AI node to camp on.

Example 3 may also be referred to as: The terminal device selects, based on the AI EDT, the AI node to camp on.

Optionally, the process of step 4.1 to step 4.8 may also be applied to a distributed learning process. Refer to step 4.1 to step 4.8. Federated learning is used as an example. Specifically, the following steps may be included:

First, a plurality of terminal devices (equivalent to clients) may send, to the RAN node by using the Msg 3, information about gradients and model parameters of neural network models. Then, the RAN node forwards the gradients from the terminal device to the AI node (equivalent to a central server). Then, the AI node determines a global gradient based on the gradients of all the terminal devices. Finally, the RAN node forwards the global gradient to all the terminal devices by using the Msg 4, and indicates, by using the Msg 4, all the terminal devices to keep in the idle state. In this process, the terminal device may be in the idle state. In this way, the terminal device can implement federated learning without exiting the idle state, to reduce power consumption.

Based on the method described in FIG. 5, the terminal device may select the AI node to be camped on from the at least one AI node based on the AI processing capability of the at least one AI node. The AI node on which the terminal device camps may be an AI node associated with the network device, or may be another AI node that can communicate with the network device. The terminal device may select the AI node whose AI processing capability matches the requirement as the AI node to be camped on, so that the terminal device obtains the AI service that meets the requirement.

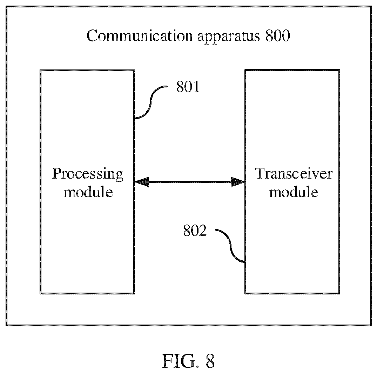

The communication method provided in embodiments of this application is described above in detail with reference to FIG. 1 to FIG. 7. The following describes, in detail with reference to FIG. 8, a communication apparatus configured to perform the communication method provided in embodiments of this application.

As shown in FIG. 8, an embodiment of this application provides a communication apparatus 800. The communication apparatus 800 may be a network device or a terminal device, may be an apparatus in a network device or a terminal device, or may be an apparatus that can be used in a matching manner with a network device or a terminal device. In a possible implementation, the communication apparatus 800 may include a module or a unit that one-to-one corresponds to the method/operation/step/action performed by the network device or the terminal device in the foregoing method embodiment. The unit may be a hardware circuit or software, or may be implemented in a combination of a hardware circuit and software.

In a possible implementation, the communication apparatus 800 may include a processing module 801 and a transceiver module 802. For ease of description, FIG. 8 shows only main components of the communication apparatus.

In some embodiments, the communication apparatus 800 may be used in the communication system shown in FIG. 3, and performs functions of the terminal device in the communication method shown in FIG. 5. In this case, the communication apparatus 800 may be understood as a first communication apparatus.

The processing module 801 is configured to receive first information from a second communication apparatus. The first information indicates an AI processing capability of at least one first node. The transceiver module 802 is configured to select a first node to be camped on from the at least one first node based on the first information.

In a possible implementation, the second communication apparatus may be a network device, the first node may be an AI node, and the AI node may be a network element having an AI function. Optionally, the at least one first node includes an AI node associated with or co-located with the network device, and may further include another AI node that can communicate with the network device. For example, when the first node and the network device are co-located, the network device may be a RAN node having the AI function.

In a possible implementation, the first information may include one or more of the following: an available resource of the first node, a computing power of the first node, a lightweight model of the first node, and model precision of a neural network model of the first node. The lightweight model is determined by the neural network model of the first node.

In a possible implementation, the available resource of the first node may include one or more of the following: processor operating performance of the first node, memory performance of the first node, and to-be-processed task information of the first node.

In a possible implementation, the transceiver module 802 is further configured to send reference data to the second communication apparatus. The reference data may be used to determine the model precision of the neural network model of the first node.

The reference data reported by the first communication apparatus may be from a to-be-processed task of the first communication apparatus. An AI processing capability determined based on the reference data may be represented as performance that is of the AI node and that exists when the AI node processes the to-be-processed task of the first communication apparatus.

In a possible implementation, the processing module 801 is further configured to measure performance of the neural network model of the first node based on the lightweight model of the first node. The lightweight model of the first node may be generated by the first node based on a first task and the neural network model.

Specifically, the processing module 801 is further configured to process the first task based on the lightweight model of the first node, to obtain processing performance, and use the processing performance to identify performance that is of the neural network model of the first node and that exists when the neural network model of the first node processes the first task.

In a possible implementation, the first information may be carried in broadcast-level information and/or terminal-level information.

Optionally, the broadcast-level information may include a SIB.

Optionally, the terminal-level information may include an RRC message. In other words, the first information may be carried in the RRC message. The first information may be alternatively carried in a NAS message.

In a possible implementation, the transceiver module 802 is further configured to receive second information from the second communication apparatus. The second information may indicate a configuration parameter of the first node to be camped on. The configuration parameter may include one or more of the following: a permission parameter, a model parameter, and dataset information. The permission parameter may indicate whether the first node to be camped on allows camping. The model parameter may be a parameter of a neural network model of the first node to be camped on. The dataset information may indicate a dataset used to train the neural network model of the first node to be camped on.

In a possible implementation, the processing module 801 is further configured to: if a computing power of a node on which the first communication apparatus currently camps is less than a computing power threshold, select the first node to be camped on from the at least one first node based on the first information.

In a possible implementation, the processing module 801 is further configured to determine a computing power of each of the at least one first node based on the first information. The processing module 801 is further configured to obtain a delay of each of the at least one first node. The processing module 801 is further configured to: when a first condition is met, determine a second node as the first node to be camped on. The first condition may include that the second node exists in the at least one first node. The second node is a first node that meets one or more of the following conditions: a computing power of the second node is greater than a first computing power, the computing power of the second node is greater than a second computing power, a delay of the second node is less than a first delay, and the delay of the second node is less than a second delay. The first computing power may be a computing power of a node on which the first communication apparatus currently camps. The second computing power may be a sum of the computing power of the node on which the first communication apparatus currently camps and a first threshold. The first delay may be a delay of the node on which the first communication apparatus currently camps. The second delay may be a sum of the delay of the node on which the first communication apparatus currently camps and a second threshold.

Optionally, the delay includes at least one of a transmission delay, a processing delay, and a communication delay. Specifically, the transmission delay may include a transmission latency of data between the first communication apparatus and the first node. The processing delay may include a processing latency of data at the first node. The communication delay may include the transmission delay and the processing delay.

In a possible implementation, the first information further indicates the first communication apparatus to keep in an idle state.

In some other embodiments, the communication apparatus 800 may be used in the communication system shown in FIG. 3, and performs functions of the network device in the communication method shown in FIG. 5. In this case, the communication apparatus 800 may be understood as a second communication apparatus.

The processing module 801 is configured to obtain first information. The first information indicates an AI processing capability of at least one first node, and the first information is used by a first communication apparatus to select a first node to be camped on from the at least one first node. The transceiver module 802 is configured to send the first information to the first communication apparatus.

In a possible implementation, the first communication apparatus may be a terminal device, the first node may be an AI node, and the AI node may be a network element having an AI function. Optionally, the at least one first node includes an AI node associated with or co-located with the network device, and may further include another AI node that can communicate with the network device. For example, when the first node and the network device are co-located, the network device may be a RAN node having the AI function.

In a possible implementation, the first information may include one or more of the following: an available resource of the first node, a computing power of the first node, a lightweight model of the first node, and model precision of a neural network model of the first node. The lightweight model is determined by the neural network model of the first node.

The lightweight model of the first node may be generated by the first node based on a first task and the neural network model.

In a possible implementation, the available resource of the first node may include one or more of the following: processor operating performance of the first node, memory performance of the first node, and to-be-processed task information of the first node.

In a possible implementation, the transceiver module 802 is further configured to receive reference data from the first communication apparatus. The reference data may be used to determine the model precision of the neural network model of the first node.

The reference data reported by the first communication apparatus may be from a to-be-processed task of the first communication apparatus. An AI processing capability determined based on the reference data may be represented as performance that is of the AI node and that exists when the AI node processes the to-be-processed task of the first communication apparatus.

In a possible implementation, the transceiver module 802 is further configured to receive AI EDT information. The AI EDT information may indicate the reference data.

In a possible implementation, the first information may be carried in broadcast-level information and/or terminal-level information.

Optionally, the broadcast-level information may include a SIB.

Optionally, the terminal-level information may include an RRC message. In other words, the first information may be carried in the RRC message. The first information may be alternatively carried in a NAS message.

In a possible implementation, the transceiver module 802 is further configured to send second information to the first communication apparatus. The second information may indicate a configuration parameter of the first node to be camped on. The configuration parameter may include one or more of the following: a permission parameter, a model parameter, and dataset information. The permission parameter indicates whether the first node to be camped on allows camping. The model parameter may be a parameter of a neural network model of the first node to be camped on. The dataset information may indicate a dataset used to train the neural network model of the first node to be camped on.

In a possible implementation, the first information further indicates the first communication apparatus to keep in an idle state.

In a possible implementation, the transceiver module 802 is further configured to send the second information to the terminal device. The second information may indicate a configuration parameter of the AI node. The configuration parameter may include one or more of the following: a permission parameter, a model parameter, and dataset information. The permission parameter may indicate whether the AI node allows camping. The model parameter may be a parameter of a neural network model of the AI node. The dataset information may indicate a dataset used to train the neural network model of the AI node.

Optionally, the transceiver module 802 may include a receiving module and a sending module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 801 executes the program or instructions, the communication apparatus 800 is enabled to perform functions of the network device or the terminal device in the communication method shown in FIG. 5.

It should be understood that the processing module 801 in the communication apparatus 800 may be implemented by a processor or a processor-related circuit component, and may be a processor or a processing unit. The transceiver module 802 may be implemented by a transceiver or a transceiver-related circuit component, and may be a transceiver or a transceiver unit.

In addition, for technical effects of the communication apparatus 800, refer to the technical effects of the communication method shown in FIG. 5. Details are not described herein again.

If the communication apparatus 800 provided in this embodiment of this application is a chip, the transceiver module 802 in the communication apparatus 800 may separately correspond to input and output of the chip. For example, the receiving module in the transceiver module 802 corresponds to the input of the chip, and the sending module in the transceiver module 802 corresponds to the output of the chip. This is not limited in this application.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an ASIC, a system on chip (system on chip, SoC), a CPU, a network processor (network processor, NP), a digital signal processor (digital signal processor, DSP), a micro controller unit (micro controller unit, MCU), a programmable logic controller (programmable logic device, PLD), or another integrated chip.

An embodiment of this application provides a communication system. The communication system includes a network device and a terminal device. The terminal device and the network device may be combined to perform the foregoing method embodiments. For a specific execution process, refer to the foregoing method embodiments. Details are not described herein again.

This application further provides a computer-readable storage medium storing a computer program. When the computer-readable storage medium is executed by a computer, functions of any one of the foregoing method embodiments are implemented.

This application further provides a computer program product. When the computer program product is executed by a computer, functions of any one of the foregoing method embodiments are implemented.

It should be understood that, the processor in embodiments of this application may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include both a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When the software is used to implement the embodiments, all or some of the foregoing embodiments may be implemented in a form of computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, or microwave) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive.

In this specification, the claims, and the accompanying drawings of this application, the terms "first", "second", "third", and the like are intended to distinguish between different objects but do not limit a particular order.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   receiving, by a first communication apparatus, first information from a second communication apparatus, wherein the first information indicates an artificial intelligence processing capability of at least one first node; and
   selecting, by the first communication apparatus, a first node to be camped on from the at least one first node based on the first information.

2. The method according to claim 1, wherein the first information comprises one or more of the following: an available resource of the first node, a computing power of the first node, a lightweight model of the first node, and model precision of a neural network model of the first node, wherein the lightweight model is determined by the neural network model of the first node.

3. The method according to claim 2, wherein the available resource of the first node comprises one or more of the following: processor operating performance of the first node, memory performance of the first node, and to-be-processed task information of the first node.

4. The method according to claim 2 or 3, wherein the method further comprises:
sending, by the first communication apparatus, reference data to the second communication apparatus, wherein the reference data is used to determine the model precision of the neural network model of the first node.

5. The method according to any one of claims 2 to 4, wherein the method further comprises:
measuring, by the first communication apparatus, performance of the neural network model of the first node based on the lightweight model of the first node.

6. The method according to any one of claims 1 to 4, wherein the first information is carried in broadcast-level information and/or terminal-level information.

7. The method according to any one of claims 1 to 5, wherein the method further comprises:

receiving, by the first communication apparatus, second information from the second communication apparatus, wherein the second information indicates a configuration parameter of the first node to be camped on, wherein the configuration parameter comprises one or more of the following: a permission parameter, a model parameter, and dataset information, the permission parameter indicates whether the first node to be camped on allows camping, the model parameter is a parameter of a neural network model of the first node to be camped on, and the dataset information indicates a dataset used to train the neural network model of the first node to be camped on.

8. The method according to any one of claims 1 to 6, wherein the selecting, by the first communication apparatus, a first node to be camped on from the at least one first node based on the first information comprises:
if a computing power of a node on which the first communication apparatus currently camps is less than a computing power threshold, selecting, by the first communication apparatus, the first node to be camped on from the at least one first node based on the first information.

9. The method according to any one of claims 1 to 7, wherein the selecting, by the first communication apparatus, a first node to be camped on from the at least one first node based on the first information comprises:

determining, by the first communication apparatus, a computing power of each of the at least one first node based on the first information;
obtaining, by the first communication apparatus, a delay of each of the at least one first node; and
when a first condition is met, determining, by the first communication apparatus, a second node as the first node to be camped on, wherein
the first condition comprises that the second node exists in the at least one first node, wherein the second node is a first node that meets one or more of the following conditions: a computing power of the second node is greater than a first computing power, the computing power of the second node is greater than a second computing power, a delay of the second node is less than a first delay, and the delay of the second node is less than a second delay; and
the first computing power is a computing power of a node on which the first communication apparatus currently camps, the second computing power is a sum of the computing power of the node on which the first communication apparatus currently camps and a first threshold, the first delay is a delay of the node on which the first communication apparatus currently camps, and the second delay is a sum of the delay of the node on which the first communication apparatus currently camps and a second threshold.

10. The method according to claim 9, wherein the delay comprises at least one of a transmission delay, a processing delay, and a communication delay, the transmission delay comprises a transmission latency of data between the first communication apparatus and the first node, the processing delay comprises a processing latency of data at the first node, and the communication delay comprises the transmission delay and the processing delay.

11. The method according to any one of claims 1 to 10, wherein the first information further indicates the first communication apparatus to keep in an idle state.

12. A communication method, comprising:

obtaining, by a second communication apparatus, first information, wherein the first information indicates an artificial intelligence processing capability of at least one first node, and the first information is used by a first communication apparatus to select a first node to be camped on from the at least one first node; and
sending, by the second communication apparatus, the first information to the first communication apparatus.

13. The method according to claim 12, wherein the first information comprises one or more of the following: an available resource of the first node, a computing power of the first node, a lightweight model of the first node, and model precision of a neural network model of the first node, wherein the lightweight model is determined by the neural network model of the first node.

14. The method according to claim 13, wherein the available resource of the first node comprises one or more of the following: processor operating performance of the first node, memory performance of the first node, and to-be-processed task information of the first node.

15. The method according to claim 13 or 14, wherein the method further comprises:
receiving, by the second communication apparatus, reference data from the first communication apparatus, wherein the reference data is used to determine the model precision of the neural network model of the first node.

16. The method according to claim 15, wherein the method further comprises:
receiving, by the second communication apparatus, artificial intelligence early data transmission information, wherein the artificial intelligence early data transmission information indicates the reference data.

17. The method according to any one of claims 12 to 16, wherein the first information is carried in broadcast-level information and/or terminal-level information.

18. The method according to any one of claims 12 to 17, wherein the method further comprises:

sending, by the second communication apparatus, second information to the first communication apparatus, wherein the second information indicates a configuration parameter of the first node to be camped on, wherein the configuration parameter comprises one or more of the following: a permission parameter, a model parameter, and dataset information, the permission parameter indicates whether the first node to be camped on allows camping, the model parameter is a parameter of a neural network model of the first node to be camped on, and the dataset information indicates a dataset used to train the neural network model of the first node to be camped on.

19. The method according to any one of claims 12 to 18, wherein the first information further indicates the first communication apparatus to keep in an idle state.

20. A communication apparatus, wherein the communication apparatus comprises a processing module and a transceiver module, wherein

the transceiver module is configured to receive first information from a second communication apparatus, wherein the first information indicates an artificial intelligence processing capability of at least one first node; and
the processing module is configured to select a first node to be camped on from the at least one first node based on the first information.

21. The apparatus according to claim 20, wherein the first information comprises one or more of the following: an available resource of the first node, a computing power of the first node, a lightweight model of the first node, and model precision of a neural network model of the first node, wherein the lightweight model is determined by the neural network model of the first node.

22. The apparatus according to claim 21, wherein the available resource of the first node comprises one or more of the following: processor operating performance of the first node, memory performance of the first node, and to-be-processed task information of the first node.

23. The apparatus according to claim 21 or 22, wherein the transceiver module is further configured to send reference data to the second communication apparatus, wherein the reference data is used to determine the model precision of the neural network model of the first node.

24. The apparatus according to any one of claims 21 to 23, wherein the processing module is further configured to measure performance of the neural network model of the first node based on the lightweight model of the first node.

25. The apparatus according to any one of claims 20 to 23, wherein the first information is carried in broadcast-level information and/or terminal-level information.

26. The apparatus according to any one of claims 20 to 24, wherein the transceiver module is further configured to receive second information from the second communication apparatus, wherein the second information indicates a configuration parameter of the first node to be camped on, wherein
the configuration parameter comprises one or more of the following: a permission parameter, a model parameter, and dataset information, the permission parameter indicates whether the first node to be camped on allows camping, the model parameter is a parameter of a neural network model of the first node to be camped on, and the dataset information indicates a dataset used to train the neural network model of the first node to be camped on.

27. The apparatus according to any one of claims 20 to 25, wherein that the processing module is configured to select a first node to be camped on from the at least one first node based on the first information comprises:
if a computing power of a node on which the communication apparatus currently camps is less than a computing power threshold, selecting, by the processing module, the first node to be camped on from the at least one first node based on the first information.

28. The apparatus according to any one of claims 20 to 26, wherein that the processing module is configured to select a first node to be camped on from the at least one first node based on the first information comprises:

determining, by the processing module, a computing power of each of the at least one first node based on the first information;
obtaining, by the processing module, a delay of each of the at least one first node; and
when a first condition is met, determining, by the processing module, a second node as the first node to be camped on, wherein
the first condition comprises that the second node exists in the at least one first node, wherein the second node is a first node that meets one or more of the following conditions: a computing power of the second node is greater than a first computing power, the computing power of the second node is greater than a second computing power, a delay of the second node is less than a first delay, and the delay of the second node is less than a second delay; and
the first computing power is a computing power of a node on which the communication apparatus currently camps, the second computing power is a sum of the computing power of the node on which the communication apparatus currently camps and a first threshold, the first delay is a delay of the node on which the communication apparatus currently camps, and the second delay is a sum of the delay of the node on which the communication apparatus currently camps and a second threshold.

29. The apparatus according to claim 28, wherein the delay comprises at least one of a transmission delay, a processing delay, and a communication delay, the transmission delay comprises a transmission latency of data between the first communication apparatus and the first node, the processing delay comprises a processing latency of data at the first node, and the communication delay comprises the transmission delay and the processing delay.

30. The apparatus according to any one of claims 20 to 29, wherein the first information further indicates the communication apparatus to keep in an idle state.

31. A communication apparatus, wherein the communication apparatus comprises a processing module and a transceiver module, wherein

the processing module is configured to obtain first information, wherein the first information indicates an artificial intelligence processing capability of at least one first node, and the first information is used by a first communication apparatus to select a first node to be camped on from the at least one first node; and

the transceiver module is configured to send the first information to the first communication apparatus.

32. The apparatus according to claim 31, wherein the first information comprises one or more of the following: an available resource of the first node, a computing power of the first node, a lightweight model of the first node, and model precision of a neural network model of the first node, wherein the lightweight model is determined by the neural network model of the first node.

33. The apparatus according to claim 32, wherein the available resource of the first node comprises one or more of the following: processor operating performance of the first node, memory performance of the first node, and to-be-processed task information of the first node.

34. The apparatus according to claim 32 or 33, wherein the transceiver module is further configured to receive reference data from the first communication apparatus, wherein the reference data is used to determine the model precision of the neural network model of the first node.

35. The apparatus according to claim 34, wherein the transceiver module is further configured to receive artificial intelligence early data transmission information, wherein the artificial intelligence early data transmission information indicates the reference data.

36. The apparatus according to any one of claims 31 to 35, wherein the first information is carried in broadcast-level information and/or terminal-level information.

37. The apparatus according to any one of claims 31 to 36, wherein the transceiver module is further configured to send second information to the first communication apparatus, wherein the second information indicates a configuration parameter of the first node to be camped on, wherein

the configuration parameter comprises one or more of the following: a permission parameter, a model parameter, and dataset information, the permission parameter indicates whether the first node to be camped on allows camping, the model parameter is a parameter of a neural network model of the first node to be camped on, and the dataset information indicates a dataset used to train the neural network model of the first node to be camped on.

38. The apparatus according to any one of claims 31 to 37, wherein the first information further indicates the first communication apparatus to keep in an idle state.

39. A communication apparatus, comprising a processor coupled to a memory, wherein the processor is configured to execute a computer program or instructions in the memory, so that the method according to any one of claims 1 to 11 is performed, or the method according to any one of claims 12 to 19 is performed.

40. The apparatus according to claim 39, wherein the apparatus further comprises at least one of the memory and a transceiver, and the transceiver is configured to receive and send data or signaling.

41. A communication apparatus, comprising a processor and an interface circuit, wherein the interface circuit is configured to receive instructions and transmit the instructions to the processor, and the processor is configured to run the instructions, so that the method according to any one of claims 1 to 11 is performed, or the method according to any one of claims 12 to 19 is performed.

42. The apparatus according to claim 41, wherein the apparatus further comprises a memory, and the memory is configured to store a computer program and/or data.

43. A processor, wherein the processor is configured to perform the method according to any one of claims 1 to 11, or the processor is configured to perform the method according to any one of claims 12 to 19.

44. A communication system, wherein the communication system comprises a first communication apparatus or a second communication apparatus, the first communication apparatus is configured to perform the method according to any one of claims 1 to 11, and the second communication apparatus is configured to perform the method according to any one of claims 12 to 19.

45. A computer-readable storage medium, comprising a computer program or instructions, wherein when the computer program or instructions are run on a computer, the method according to any one of claims 1 to 11 is performed, or the method according to any one of claims 12 to 19 is performed.

46. A computer program product comprising instructions, wherein when the computer program product is run on a computer, the method according to any one of claims 1 to 11 is performed, or the method according to any one of claims 12 to 19 is performed.

47. A chip, wherein the chip comprises a processing logic circuit and an interface circuit, the interface circuit is configured to receive code instructions and transmit the code instructions to the processing logic circuit, and the processing logic circuit is configured to run the code instructions, so that the method according to any one of claims 1 to 11 is performed, or the method according to any one of claims 12 to 19 is performed.

48. The chip according to claim 47, wherein the chip further comprises a memory, and the memory is configured to store a computer program and/or data.

FIG. 1

Network
device 1

AI
node 1

Terminal
device 1

Terminal
device 2

Network
device 2

AI
node 2

Terminal
device 2

Terminal
device 3

FIG. 2

Network
device

Terminal
device

Terminal
device

FIG. 3

400

401 407 403

Processor Processor

CPU 0 CPU 0

CPU 1 CPU 1

402

Memory

404 405 406

Communication interface | Output device | Input device

FIG. 4

Terminal device | Network device

S501: Reference data

S502: Obtain first information

S503: First information

S504: Select a first node to be camped on from at least one first node based on the first information

S505: Second information

FIG. 5

FIG. 6

FIG. 7

Communication apparatus 800

Processing module

Transceiver module

801

802

FIG. 8

## INTERNATIONAL SEARCH REPORT

| | International application No. |
|---|---|
| | **PCT/CN2022/143021** |

| **A.** | **CLASSIFICATION OF SUBJECT MATTER** |
|---|---|
| | H04W48/02(2009.01)i;H04W36/00(2009.01)i |

According to International Patent Classification (IPC) or to both national classification and IPC

| **B.** | **FIELDS SEARCHED** |
|---|---|

Minimum documentation searched (classification system followed by classification symbols)

　　IPC:H04W

Documentation searched other than minimum documentation to the extent that such documents are included in the fields searched

Electronic data base consulted during the international search (name of data base and, where practicable, search terms used)

　　CNTXT, ENTXTC, CNKI, 3GPP: 人工智能, 能力, 接入, 重选, 切换, 模型, AI, capability, access, reselect, switch, model

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 111837425 A (BEIJING XIAOMI MOBILE SOFTWARE CO., LTD.) 27 October 2020 (2020-10-27)<br>　　see description, paragraphs 0004-0074 | 1-48 |
| Y | CN 111132254 A (HUAWEI TECHNOLOGIES CO., LTD.) 08 May 2020 (2020-05-08)<br>　　see description, paragraphs 0004-0070 | 1-48 |
| A | CN 101646223 A (SHANGHAI HUAWEI TECHNOLOGIES CO., LTD.) 10 February 2010 (2010-02-10)<br>　　entire document | 1-48 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 March 2023** | **24 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/CN2022/143021**</td></tr>
</table>

| Patent document cited in search report | Publication date (day/month/year) | Patent family member(s) | Publication date (day/month/year) |
|---|---|---|---|
| CN 111837425 A | 27 October 2020 | None | |
| CN 111132254 A | 08 May 2020 | EP 3866511 A1 | 18 August 2021 |
| | | EP 3866511 A4 | 05 January 2022 |
| | | WO 2020088283 A1 | 07 May 2020 |
| | | US 2021266809 A1 | 26 August 2021 |
| CN 101646223 A | 10 February 2010 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111660387X